(19) Europäisches Patentamt
European Patent Office
Office européen des brevets

(11) EP 1 865 003 A1

(12) **EUROPEAN PATENT APPLICATION**
published in accordance with Art. 158(3) EPC

(43) Date of publication:
**12.12.2007 Bulletin 2007/50**

(21) Application number: **06730108.5**

(22) Date of filing: **27.03.2006**

(51) Int Cl.:
***C08F 8/00*** *(2006.01)* ***C08F 293/00*** *(2006.01)*
***C09J 153/00*** *(2006.01)*

(86) International application number:
**PCT/JP2006/306160**

(87) International publication number:
**WO 2006/104097 (05.10.2006 Gazette 2006/40)**

(84) Designated Contracting States:
**AT BE BG CH CY CZ DE DK EE ES FI FR GB GR HU IE IS IT LI LT LU LV MC NL PL PT RO SE SI SK TR**

(30) Priority: **28.03.2005 JP 2005092835**

(71) Applicant: **Kaneka Corporation**
**Kita-ku**
**Osaka-shi, Osaka 530-8288 (JP)**

(72) Inventors:
- **FUJITA, Nao c/o KANEKA CORPORATION Osaka, 5660072 (JP)**
- **NAKAGAWA, Yoshiki c/o KANEKA CORPORATION Osaka, 5660072 (JP)**

(74) Representative: **Hart Davis, Jason et al**
**Cabinet Beau de Loménie,**
**158, rue de l'Université**
**75340 Paris Cedex 07 (FR)**

# (54) ACRYLIC BLOCK COPOLYMER AND REACTIVE HOT-MELT ADHESIVE COMPOSITIONS

(57) The present invention has its object to provide an acrylic hot-melt pressure-sensitive adhesive composition showing only small changes in melt viscosity, showing good hot-melt applicability and excellent in initial cohesive force prior to moisture curing, and showing excellent tackiness and thermostable cohesive force after moisture curing.

The present invention relates to a acrylic block copolymer which comprises an acrylic polymer block (A) and an acrylic polymer block (B) differing in glass transition temperature range and having at least one crosslinkable functional group (X) at its molecular termini; and a reactive hot-melt adhesive composition which comprises the acrylic block copolymer described above.

EP 1 865 003 A1

## Description

TECHNICAL FIELD

The present invention relates to a functional group-terminated acrylic block copolymer and a reactive hot-melt adhesive composition comprising the same.

BACKGROUND ART

Main adhesive compositions known in the art are of the hot melt type or reactive type.

Hot-melt adhesive compositions are heated and melted and applied using a hot-melt applicator and then cooled and solidified, whereby instantaneous adhesion can be provided. They are well known as compositions having both workability and instantaneous adhesion, which are favorable characteristics. On the other hand, the adhesions formed with them are very low in adhesion strength at elevated temperatures and, in particular in environments at 80°C or higher temperatures, the reliability of the adhesions becomes questionable. Currently, hot-melt adhesive compositions are widely used in such industries as bookbinding, packaging, fiber, furniture, woodworking, light electrical appliance, and transportation industries. However, due to the limitations from the thermostable adhesion strength viewpoint, the range of their use in each field of application is restricted, and they are recognized as non-structural adhesives in the relevant field of technology. In the field of product assembly, in particular, adhesive compositions rich in thermal resistance and retaining the initial adhesion of hot melts are desired; under the existing circumstances, the conventional hot-melt compositions cannot be used due to marked decreases in adhesion strength at elevated temperatures.

On the other hand, reactive adhesive compositions can be expected to provide rigidity and adhesion strength at elevated temperatures and are used as structural adhesives. However, those reactive adhesive compositions which are generally well known, for example epoxy, urethane and acrylic-based ones, are very poor in initial adhesion strength, so that it is essential to increase the adhesion strength by an appropriate curing reaction; it is a problem that a long curing time is required therefor.

For such reasons, various investigations have been made to develop reactive hot-melt adhesive compositions having the initial adhesion and other characteristics of the hot-melt type as well as the thermostable adhesion strength of the reactive type.

Acrylic pressure-sensitive adhesives are excellent in weather resistance, degradation resistance and tackiness and therefore are used in various fields, for example in manufacturing pressure-sensitive labels, pressure-sensitive sheets and pressure-sensitive tapes. Currently, they are mainly of the solvent type or emulsion type. On the other hand, the hot-melt pressure-sensitive adhesives in current use are compositions based on a styrene-isobutylene-styrene block copolymer. They are, however, poor in weather resistance and degradation resistance. With the increasing demand for solventless pressure-sensitive adhesives, certain attempts have been made to derive hot-melt adhesives from acrylic pressure-sensitive adhesives. Various investigations concerning the acrylic monomer species, the structure thereof and the functional group have been made. Among them, a moisture-curable hot-melt adhesive composition comprising a hydrolysable silyl group-containing acrylic graft copolymer has also been disclosed (cf. Patent Document 1). The use of such graft copolymer, however, sometimes results in insufficient initial adhesion and initial cohesive force before moisture curing even when an appropriate melt viscosity (not higher than $10 \times 10^4$ centipoises) is attained at a relatively low temperature (about 120°C) to thereby achieve good hot-melt applicability.

Thus, there is not yet any acrylic hot-melt pressure-sensitive adhesive composition available that can satisfactorily meet the demand of the market. Under the present conditions, a hot-melt pressure-sensitive adhesive composition showing only small changes in melt viscosity prior to moisture curing, showing good hot-melt applicability and excellent in initial cohesive force and excellent in tackiness and thermostable cohesive force after moisture curing is earnestly desired in particular.

Patent Document 1: Japanese Kokai Publication Hei-05-320608

SUMMARY OF THE INVENTION

It is an object of the present invention to provide an acrylic hot-melt pressure-sensitive adhesive composition showing only small changes in melt viscosity, showing good hot-melt applicability and excellent in initial cohesive force prior to moisture curing, and showing excellent tackiness and thermostable cohesive force after moisture curing.

As a result of intensive investigations made by them in an attempt to accomplish the above obj ect, the present inventors found that the above-mentioned problems can be successfully solved by providing an acrylic block copolymer which comprises an acrylic polymer block (A) and an acrylic polymer block (B) differing in glass transition temperature range and having a crosslinkable functional group (X) at a copolymer terminus. Such and other findings have led to completion of the present invention.

Thus, the present invention relates to
An acrylic block copolymer
which comprises an acrylic polymer block (A) and an acrylic polymer block (B) differing in glass transition temperature range and having at least one crosslinkable functional group (X) at its molecular termini.

The invention also relates to
The acrylic block copolymer as specified above
which comprises at least one block copolymer selected from among block copolymers represented by the general formula: $(A\text{-}B)_n$, the general formula: $B\text{-}(A\text{-}B)_n$ or the general formula: $(A\text{-}B)_n\text{-}A$ (wherein, in each formula, n is an integer of 1 to 3 and, when a plurality of As and/or Bs are involved, they may respectively be the same or different.)

Further, the invention relates to:

The acrylic block copolymer as specified above
wherein the acrylic polymer block (A) comprises a polymer having a glass transition temperature of not lower than 0°C;
The acrylic block copolymer as specified above
wherein, among the monomers constituting the acrylic polymer block (A), an acrylic monomer (a) accounts for 50 to 100% by weight of the whole of the constituent monomers;
The acrylic block copolymer as specified above
wherein the acrylic monomer (a) is one such that a homopolymer thereof shows a glass transition temperature of not lower than 0°C;
The acrylic block copolymer as specified above
wherein the acrylic monomer (a) comprises at least one monomer selected from the group consisting of acrylic acid, methyl acrylate, tert-butyl acrylate, phenyl acrylate, benzyl acrylate, norbornyl acrylate, isobornyl acrylate, adamantyl acrylate, and acrylic acid alkyl esters whose alkyl moiety contains 13 to 20 carbon atoms (exclusive of isomyristyl acrylate, isopalmityl acrylate, isostearyl acrylate and isoeicosyl acrylate).

Further, the invention relates to:

The acrylic block copolymer as specified above
wherein the acrylic block copolymer (B) comprises a polymer having a glass transition temperature of not lower than -100°C but lower than 0°C;
The acrylic block copolymer as specified above
wherein, among the monomers constituting the acrylic polymer block (B), an acrylic monomer (b) accounts for 50 to 100% by weight of the whole of the constituent monomers;
The acrylic block copolymer as specified above
wherein the acrylic monomer (b) is one such that a homopolymer thereof shows a glass transition temperature of not lower than -100°C but lower than 0°C;
The acrylic block copolymer as specified above
wherein the acrylic monomer (b) comprises at least one monomer selected from the group consisting of acrylic acid alkyl esters whose alkyl moiety contains 2 to 12 carbon atoms (exclusive of tert-butyl acrylate), isomyristyl acrylate, isopalmityl acrylate, isostearyl acrylate and isoeicosyl acrylate.

Further, the invention relates to:

The acrylic block copolymer as specified above
wherein the crosslinkable functional group (X) comprises at least one group selected from the group consisting of crosslinkable silyl, epoxy, hydroxyl, amino, isocyanato, carboxylic acid, acid anhydride, alkenyl, (meth)acryloyl and active halogen groups;
The acrylic block copolymer as specified above
wherein the crosslinkable functional group (X) is a crosslinkable silyl group represented by the general formula 1:

$$-Si(R^{10})_{3-d}(Y)_d \qquad (1)$$

(wherein $R^{10}$ represents an alkyl group containing 1 to 20 carbon atoms, an aryl group containing 6 to 20 carbon atoms, an aralkyl group containing 7 to 20 carbon atoms or a triorganosiloxy group represented by the formula $(R')_3SiO$- (in which R' is a monovalent hydrocarbon group containing 1 to 20 carbon atoms and the three R' groups may be the same or different) and, when the silyl group contains two or more $R^{10}$ groups, these may be the same or different; Y

represents a hydroxyl group or a hydrolysable group and, when the silyl group contains two or more Y groups, these may be the same or different; and d represents 1, 2 or 3.)

Further, the invention relates to:

The acrylic block copolymer as specified above which has a number average molecular weight of 2,000 to 200,000;
The acrylic block copolymer as specified above which has a number average molecular weight of 3, 000 to 150, 000;
The acrylic block copolymer as specified above which has a number average molecular weight of 5,000 to 100,000.

The invention also relates to
A reactive hot-melt adhesive composition
which comprises the acrylic block copolymer as specified above.

DETAILED DESCRIPTION OF THE INVENTION

The acrylic block copolymer of the invention is an acrylic block copolymer comprising an acrylic polymer block (A) and an acrylic polymer block (B) differing in glass transition temperature range and characterized by having at least one crosslinkable functional group (X) at a terminus of the acrylic block copolymer and is useful as a reactive hot-melt adhesive in particular. The following two features may be mentioned as typical characteristics thereof.

(1) Since it shows a low melt viscosity and can be applied at low temperatures, it can be used in bonding materials sensitive to heat. Further, it has good viscosity stability.
(2) It is of the moisture curing type, namely can be cured after application due to moisture in the air, among others; after curing, it shows a high level of thermal stability.

In the following, the acrylic block copolymer and reactive hot-melt adhesive composition of the invention are described in detail.

<Acrylic block copolymer>

Structurally, the acrylic block copolymer preferably is a linear block copolymer or a branched (star-like) block copolymer, or a mixture of these. Any appropriate one from among such block copolymer structures can be used according to the required characteristics, for example the physical characteristics required of the copolymer and the pressure-sensitive adhesive characteristics such as the working characteristics and holding power required of a composition comprising the copolymer and a thermoplastic resin.

The linear block copolymer may have any optional structure but, from the viewpoint of physical properties of pressure-sensitive adhesive characteristics, it preferably comprises at least one block copolymer selected from the group consisting of block copolymers represented by the general formula: (A-B) n, B-(A-B)n or(A-B) n-A (in which A is an acrylic block copolymer (A) (hereinafter referred to also as "polymer block (A)" or "block A"), B is an acrylic block B (hereinafter referred to also as "polymer block (B)" or "block (B)") and n is an integer of 1 to 3 and, when a plurality of As and/or Bs are involved, they may respectively be the same or different). Among them, A-B type diblock copolymers, A-B-A type triblock copolymers, and mixtures of these are more preferred from the viewpoint of ease of handling in processing and physical characteristics of pressure-sensitive adhesive compositions.

The constitutional ratio between the polymer block (A) and polymer block (B) constituting the acrylic block copolymer can be selected according to the physical characteristics required in the field of application in question, the moldability required on the occasion of processing of the pressure-sensitive adhesive composition and the molecular weights respectively required of the polymer block (A) and polymer block (B).

The constitutional ratio between the polymer block (A) and polymer block (B) is preferably such that the polymer block (A) accounts for 3 to 80% by weight and the polymer block (B) for 97 to 20% by weight. More preferably, the polymer block (A) accounts for 5 to 40% by weight and the polymer block (B) for 95 to 60% by weight. When the proportion of the polymer block (A) is lower than 3% by weight, the cohesive force tends to decrease at elevated temperatures, causing decreases in holding power of the pressure-sensitive adhesive composition at elevated temperatures and, when that proportion is higher than 80% by weight, the adhesive strength tends to decrease.

The number average molecular weight of the acrylic block copolymer can be selected according to the molecular weights respectively required of the polymer block (A) and polymer block (B). When the molecular weight is low, there is a tendency for the pressure-sensitive adhesive characteristics required of the pressure-sensitive adhesive composition,

for example a sufficient level of holding power, to be hardly manifested and, when, conversely, the molecular weight is unnecessarily high, the working characteristics tend to deteriorate. Therefore, the number average molecular weight of the acrylic block copolymer is preferably 2, 000 to 200, 000, more preferably 3, 000 to 150,000, still more preferably 5,000 to 100,000.

The molecular weight referred to above is determined on the polystyrene equivalent basis by gel permeation chromatography (GPC) measurements using a polystyrene gel column and chloroform as the mobile phase. The molecular weight of each of the polymers and the like appearing later herein is also determined in the same manner.

The molecular weight distribution of the acrylic block copolymer of the invention, namely the ratio (Mw/Mn) between the weight average molecular weight (Mw) and number average molecular weight (Mn) as determined by gel permeation chromatography, is not particularly restricted but is preferably not higher than 1.8, more preferably not higher than 1.7, still more preferably not higher than 1.5, particularly preferably not high than 1.3. Low molecular weight distributions give such advantages as low levels of melt viscosity.

The molecular weight distribution can be determined in the same manner as in the molecular weight measurement.

As regards the relation between the glass transition temperatures of the polymer block (A) and polymer block (B) constituting the acrylic block copolymer, it is preferred that the following relation be satisfied:

$$TgA > TgB$$

where TgA is the glass transition temperature of the polymer block (A) and TgB is the glass transition temperature of the polymer block (B).

The glass transition temperatures (Tg) of the polymer blocks (polymer block (A) and polymer block (B)) can be approximately calculated using the weight fractions of the monomers in each polymer block according to the following Fox equation:

$$1/Tg = (W1/Tg1) + (W2/Tg2) + \cdots + (Wm/Tgm)$$

$$W1 + W2 + \cdots + Wm = 1$$

(In the above equations, Tg represents the glass transition temperature of each polymer block, Tg1, Tg2, ···, Tgm represent the glass transition temperatures of the respective polymerized monomers (homopolymers) and W1, W2, ···, Wm represent the weight fractions of the respective polymerized monomers.)

The glass transition temperatures of the respective polymerized monomers, which are to be used in the above Fox equation, are described, for example, in Polymer Handbook, Third Edition Wiley-Interscience, 1989, and those values are used herein.

For those which are not described in the above-cited Polymer Handbook, the glass transition temperatures can be determined by measurements using a differential scanning calorimeter (DSC).

The glass transition temperatures (Tg) of the polymer block (A) and polymer block (B) are to be described later herein. In the mean time, when a block copolymer is made of a block (A) which is a segment having a Tg generally higher than room temperature and a block (B) which is a segment having a Tg generally lower than room temperature, this resin undergoes microphase separation. The block (B) forms an elasticity-imparting network chain, and the block (A) flows at elevated temperatures while it serves as a crosslinking site owing to the cohesive force at ordinary temperature. Therefore, such copolymer shows the properties of a rubber (elastomer) at room temperature and, when warmed, can flow or otherwise undergo plastic deformation and thus can be suitably used as a hot-melt adhesive.

<Acrylic polymer block (A)>

From the viewpoint of ease of obtaining an acrylic block copolymer having desired physical characteristics and from the cost and ready availability viewpoint, the monomer constituting the acrylic polymer block (A) comprises preferably 50 to 100% by weight, more preferably 80 to 100% by weight, of an acrylic monomer (a), in particular an acrylate ester monomer, and preferably 0 to 50% by weight, more preferably 0 to 20% by weight, of some other vinyl monomer copolymerizable therewith.

Thus, the acrylic polymer block (A) is preferably one obtained by polymerization using 50 to 100% by weight of an acrylic monomer (a).

The acrylic monomer (a) constituting the acrylic polymer block (A) is preferably one capable of giving a homopolymer showing a Tg of not lower than 0°C.

As the acrylate ester monomer constituting the block (A), there may be mentioned, for example, acrylic acid aliphatic hydrocarbon esters such as acrylic acid, methyl acrylate, tert-butyl acrylate, n-myristyl acrylate, n-palmityl acrylate, n-stearyl acrylate and n-eicosyl acrylate; acrylic acid alicyclic hydrocarbon esters such as norbornyl acrylate, isobornyl acrylate and adamantyl acrylate; acrylic acid aromatic hydrocarbon esters such as phenyl acrylate and toluyl acrylate; acrylic acid aralkyl esters such as benzyl acrylate; acrylic acid esters of ether oxygen-containing functional group-containing alcohols; and acrylic acid fluoroalkyl esters.

These may be used singly or two or more of them may be used in combination. Among them, acrylic acid, methyl acrylate, tert-butyl acrylate, phenyl acrylate, benzyl acrylate, norbornyl acrylate, isobornyl acrylate, adamantyl acrylate, and acrylic acid alkyl esters whose alkyl moiety contains 13 to 20 carbon atoms (exclusive of isomyristyl acrylate, isopalmityl acrylate, isostearyl acrylate and isoeicosyl acrylate) are preferred from the viewpoint of pressure-sensitive adhesive characteristics, cost and ready availability and from the viewpoint of the glass transition temperature to be described later herein.

As the other vinyl monomer copolymerizable with the acrylate ester monomer constituting the block (A), there may be mentioned, for example, methacrylate esters, aromatic alkenyl compounds, cyanovinyl compounds, conjugated diene compounds, halogenated unsaturated compounds, unsaturated dicarboxylic acid compounds, vinyl ester compounds and maleimide compounds.

As the methacrylate ester monomer, there may be mentioned, for example, methacrylic acid aliphatic hydrocarbon esters such as methacrylic acid, methyl methacrylate, tert-butyl methacrylate, n-myristyl methacrylate, n-palmityl methacrylate, n-stearyl methacrylate and n-eicosyl methacrylate; methacrylic acid alicyclic hydrocarbon esters such as norbornyl methacrylate, isobornyl methacrylate and adamantyl methacrylate; methacrylic acid aromatic hydrocarbon esters such as phenyl methacrylate and toluyl methacrylate; methacrylic acid aralkyl esters such as benzyl methacrylate; methacrylic acid esters of ether oxygen-containing functional group-containing alcohols; and methacrylic acid fluoroalkyl esters.

As the aromatic alkenyl compounds, there may be mentioned, for example, styrene, $\alpha$-methylstyrene, p-methylstyrene and p-methoxystyrene.

As the cyanovinyl compounds, there may be mentioned, for example, acrylonitrile and methacrylonitrile.

As the conjugated diene compounds, there may be mentioned, for example, butadiene and isoprene.

As the halogen-containing unsaturated compounds, there may be mentioned, for example, vinyl chloride, vinylidene chloride, perfluoroethylene, perfluoropropylene and vinylidene fluoride.

As the unsaturated dicarboxylic acid compounds, there may be mentioned, for example, maleic anhydride, maleic acid, maleic acid monoalkyl esters and dialkyl esters, fumaric acid, and fumaric acid monoalkyl and dialkyl esters.

As the vinyl ester compounds, there may be mentioned, for example, vinyl acetate, vinyl propionate, vinyl pivalate, vinyl benzoate and vinyl cinnamate.

As the maleimide compounds, there may be mentioned, for example, maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide.

These may be used singly or two or more of them may be used in combination.

Among these vinyl monomers, a preferred one can be selected so that the block copolymer may show good compatibility with the thermoplastic resin and/or thermoplastic elastomer to be used in combination therewith.

The molecular weight required of the block (A) may be selected according to the cohesive force required of the block (A) and the time required for production thereof by polymerization.

The cohesive force is said to depend on the intermolecular interaction (in other words, polarity) and the degree of intermolecular entanglement; with the increase in molecular weight, the number of sites of entanglement increases and the cohesive force increases. Thus, when a cohesive force is required, the range of the molecular weight MA required of the block (A) is preferably given by the relation MA > McA, for instance, where McA is the molecular weight between sites of entanglement of the polymer constituting the block (A). When a further cohesive force is required, that range is preferably MA > 2 x McA. When, conversely, a certain level of cohesive force and creep characteristics are simultaneously desired, the range McA < MA < 2 x McA is preferred. As for the molecular weight between sites of entanglement, the Wu et al. report (Polymer Engineering and Science, 1990, Vol. 30, page 753), for instance, can be consulted. Since, however, higher number average molecular weights tend to prolong the polymerization time, the molecular weight is to be selected according to the required productivity; preferably, it is not higher than 200,000, more preferably not higher than 100,000.

The glass transition temperature (TgA) of the block (A) is preferably not lower than 0°C. Thus, the acrylic polymer block (A) preferably comprises a polymer whose glass transition temperature is not lower than 0°C. More preferably, the TgA is 20 to 100°C. When the glass transition temperature is lower than 0°C, the pressure-sensitive adhesive characteristics at elevated temperatures tend to deteriorate.

The glass transition temperature (TgA) of the above-mentioned polymer (block (A)) can be adjusted according to the Fox equation given above by varying the proportions of the monomers constituting the polymer.

Here, the glass transition temperature is the one calculated according to the Fox equation using the glass transition temperature values for the homopolymers of respective monomers constituting the polymer as described in the above-cited monograph "Polymer Handbook, Third Edition" and using the weight fractions of the respective monomers polymerized.

<Acrylic polymer block (B)>

From the viewpoint of ease of obtaining an acrylic block copolymer having desired physical characteristics and from the cost and ready availability viewpoint, the monomer constituting the acrylic polymer block (B) comprises preferably 50 to 100% by weight, more preferably 80 to 100% by weight, of an acrylic monomer (b), in particular an acrylate ester monomer, and preferably 0 to 50% by weight, more preferably 0 to 20% by weight, of some other vinyl monomer copolymerizable therewith.

Thus, the acrylic polymer block (B) is preferably one obtained by polymerization using 50 to 100% by weight of an acrylic monomer (b).

The acrylic monomer (b) constituting the acrylic polymer block (B) is preferably one capable of giving a homopolymer showing a Tg of not lower than -100°C and lower than 0°C.

As the acrylate ester monomers constituting the block (B), there may be mentioned, for example, acrylic acid aliphatic hydrocarbon esters such as ethyl acrylate, n-propyl acrylate, isopropyl acrylate, n-butyl acrylate, isobutyl acrylate, n-pentyl acrylate, n-hexyl acrylate, n-heptyl acrylate, n-octyl acrylate, 2-ethylhexyl acrylate, nonyl acrylate, decyl acrylate, dodecyl acrylate, isomyristyl acrylate, isopalmityl acrylate, isostearyl acrylate and isoeicosyl acrylate; acrylic acid alicyclic hydrocarbon esters such as cyclohexyl acrylate; acrylic acid aromatic hydrocarbon esters; acrylic acid aralkyl esters; acrylic acid esters of ether oxygen-containing functional group-containing alcohols such as 2-methoxyethyl acrylate and 3-methoxybutyl acrylate; and acrylic acid fluoroalkyl esters.

These may be used singly or two or more of them may be used in combination.

Among them, preferred in view of the pressure-sensitive adhesive characteristics, rubber elasticity and shock resistance of the resulting hot-melt adhesive composition and from the cost and ready availability viewpoint are acrylic acid alkyl esters (exclusive of tert-butyl acrylate) whose alkyl moiety contains 2 to 12 carbon atoms, isomyristyl acrylate, isopalmityl acrylate, isostearyl acrylate and isoeicosyl acrylate. Among these, n-butyl acrylate and 2-ethylhexyl acrylate are particularly preferred.

When the composition produced is required to have oil resistance, ethyl acrylate is preferred. When low-temperature characteristics are required, 2-ethylhexyl acrylate is preferred. Further, when oil resistance and low temperature characteristics are simultaneously required, mixtures of ethyl acrylate, n-butyl acrylate and 2-methoxyethyl acrylate are preferred.

As the other vinyl monomer copolymerizable with the acrylate ester monomer constituting the block (B), there may be mentioned, for example, methacrylate esters, aromatic alkenyl compounds, cyanovinyl compounds, conjugated diene compounds, halogenated unsaturated compounds, unsaturated dicarboxylic acid compounds, vinyl ester compounds and maleimide compounds.

As the above-mentioned methacrylic acid esters, there may be mentioned, for example, methacrylic acid aliphatic hydrocarbon esters such as ethyl methacrylate, n-propyl methacrylate, isopropyl methacrylate, n-butyl methacrylate, isobutyl methacrylate, n-pentyl methacrylate, n-hexyl methacrylate, n-heptyl methacrylate, n-octyl methacrylate, 2-ethylhexyl methacrylate, nonyl methacrylate, decyl methacrylate, dodecyl methacrylate, isomyristyl methacrylate, isopalmityl methacrylate, isostearyl methacrylate and isoeicosyl methacrylate; methacrylic acid alicyclic hydrocarbon esters such as cyclohexyl methacrylate; methacrylic acid aromatic hydrocarbon esters; methacrylic acid aralkyl esters; methacrylic acid esters of ether oxygen-containing functional group-containing alcohols such as 2-methoxyethyl methacrylate and 3-methoxybutyl methacrylate; and methacrylic acid fluoroalkyl esters.

As the aromatic alkenyl compounds, there may be mentioned, for example, styrene, α-methylstyrene, p-methylstyrene and p-methoxystyrene.

As the cyanovinyl compounds, there may be mentioned, for example, acrylonitrile and methacrylonitrile.

As the conjugated diene compounds, there may be mentioned, for example, butadiene and isoprene.

As the halogen-containing unsaturated compounds, there may be mentioned, for example, vinyl chloride, vinylidene chloride, perfluoroethylene, perfluoropropylene and vinylidene fluoride.

As the unsaturated dicarboxylic acid compounds, there may be mentioned, for example, maleic anhydride, maleic acid, maleic acid monoalkyl esters and dialkyl esters, fumaric acid, and fumaric acid monoalkyl esters and dialkyl esters.

As the vinyl ester compounds, there may be mentioned, for example, vinyl acetate, vinyl propionate, vinyl pivalate, vinyl benzoate and vinyl cinnamate.

As the maleimide compounds, there may be mentioned, for example, maleimide, methylmaleimide, ethylmaleimide, propylmaleimide, butylmaleimide, hexylmaleimide, octylmaleimide, dodecylmaleimide, stearylmaleimide, phenylmaleimide and cyclohexylmaleimide.

These may be used singly or two or more of them may be used in combination.

From among the above-mentioned vinyl monomers, an appropriate one can be selected for use according to the glass transition temperature required of the block (B), the elastic modulus and polarity thereof, the physical characteristics required of the pressure-sensitive adhesive composition to be produced, the compatibility of the copolymer with the thermoplastic resin and/or thermoplastic elastomer, among others. For improving the oil resistance of the pressure-sensitive adhesive composition, for instance, acrylonitrile can be used for copolymerization.

The molecular weight required of the block (B) may be selected according to the elastic modulus required of the block (B), the pressure-sensitive adhesive characteristics and the time required for the polymerization thereof, among others.

The above-mentioned elastic modulus and the tackiness are closely related to the mobility of molecular chains (in other words, glass transition temperature) and the molecular weight thereof, and the intrinsic characteristics are manifested only at molecular weights exceeding a certain level. From this viewpoint, higher molecular weights are desirable. Thus, the range of the number average molecular weight MB required of the block (B) is preferably given by the relation MB > 1,000, more preferably MB > 5,000, still more preferably MB > 10,000, for instance. Since, however, higher number average molecular weights tend to prolong the polymerization time, the number average molecular weight is to be selected according to the required productivity; preferably, it is not higher than 500,000, more preferably not higher than 300,000.

The glass transition temperature (TgB) of the block (B) is preferably not higher than -100°C but lower than 0°C. Thus, the acrylic polymer block (B) preferably comprises a polymer whose glass transition temperature is not lower than -100°C but lower than 0°C. More preferably, the TgB is not lower than -100°C but lower than -20°C. When the glass transition temperature is 0°C or higher, the rubber elasticity of the acrylic block copolymer tends to decrease.

The glass transition temperature (TgB) of the above-mentioned polymer (block (B)) can be adjusted according to the Fox equation given above by varying the proportions of the polymer-constituting monomers.

Here, the glass transition temperature is the one calculated according to the Fox equation using the glass transition temperature values for the homopolymers of respective monomers constituting the polymer as described in the above-cited monograph "Polymer Handbook, Third Edition" and using the weight fractions of the respective monomers polymerized.

<Crosslinkable functional group (X)>

While it is known in the art that hot-melt adhesive compositions are compositions which can provide an instantaneous adhesion upon application in the heated and molten state using a hot melt applicator, followed by cooling for solidification and thus has both favorable workability and instantaneous adhesion, the existing situation is such that the conventional hot-melt compositions cannot be used because of marked decreases in adhesion strength at elevated temperatures, as already mentioned hereinabove. Thus, in the case of ordinary hot-melt adhesives, the technique of heat-activated adhesion at 120°C or above is required for attaining thermal stability at 90°C and above. Those which can be applied for heat-activated adhesion at 80°C or below have a problem in that the thermal stability is maintained only at about 40 to 50°C.

On the contrary, by introducing a crosslinkable functional group and causing the same to react for crosslinking during or after heat and melting, application and/or cooling and solidification, it becomes possible to expect high-temperature rigidity and adhesion strength to be attained.

The crosslinkable functional group (X) to be used in the practice of the invention is not particularly restricted but includes crosslinkable silyl, epoxy, hydroxyl, amino, isocyanato, carboxylic acid, acid anhydride, alkenyl, (meth) acryloyl and active halogen groups, among others.

As the alkenyl group, there may specifically be mentioned allyl, butenyl, pentenyl, hexenyl, octenyl, decenyl and like groups.

As the active halogen group, there may specifically be mentioned chlorine, bromine and iodine groups.

As the crosslinkable silyl group, there may be mentioned crosslinkable silyl groups represented by the general formula 1:

$$-Si(R^{10})_{3-d}(Y)_d \qquad (1)$$

(wherein $R^{10}$ represents an alkyl group containing 1 to 20 carbon atoms, an aryl group containing 6 to 20 carbon atoms, an aralkyl group containing 7 to 20 carbon atoms or a triorganosiloxy group represented by the formula $(R')_3SiO-$ (in which R' is a monovalent hydrocarbon group containing 1 to 20 carbon atoms and the three R' groups may be the same

or different) and, when the silyl group contains two or more $R^{10}$ groups, these may be the same or different; Y represents a hydroxyl group or a hydrolysable group and, when the silyl group contains two or more Y groups, these may be the same or different; and d represents 1, 2 or 3.)

As the alkyl group containing 1 to 20 carbon atoms as represented by $R^{10}$, there may be mentioned methyl, ethyl, propyl, butyl, pentyl, hexyl, octyl, decyl, dodecyl, tetradecyl and octadecyl group, among others.

As the aryl group containing 6 to 20 carbon atoms, there may be mentioned phenyl and toluyl group, among others.

As the aralkyl group containing 7 to 20 carbon atoms, there may be mentioned benzyl and phenethyl group, among others.

As the monovalent hydrocarbon group containing 1 to 20 carbon atoms as represented by R', there may preferably be mentioned alkyl groups containing 1 to 20 carbon atoms, among others, and specific examples thereof are the same as described above referring to $R^{10}$.

The hydrolysable group represented by Y is not particularly restricted but may be any of those which are conventional in the art, specifically including a hydrogen atom, halogen atoms, and alkoxy, acyloxy, ketoximate, amino, amide, aminoxy, mercapto and alkenyloxy groups, among others. Alkoxy groups are particularly preferred in view of their mild hydrolyzability and ease of handling.

As the halogen atoms, there may be mentioned fluorine, chlorine, bromine and iodine atoms.

The alkoxy groups preferably contain 1 to 20 carbon atoms and include, for example, methoxy, ethoxy, propoxy and butoxy group.

The acyloxy groups preferably contain 1 to 20 carbon atoms and include, for example, formyloxy, acetyloxy and propionyloxy group.

The ketoximate groups preferably contain 1 to 20 carbon atoms.

The alkenyloxy groups preferably contain 2 to 20 carbon atoms and include, for example, vinyloxy, allyloxy and butenyloxy group.

From the curability viewpoint, the integer d is preferably 2 or more, although d is not particularly restricted. Those silyl groups in which d is 3 (e.g. trimethoxy function) can be cured faster than those in which d is 2 (e.g. dimethoxy function). However, those in which d is 2 are sometimes superior in storage stability and mechanical characteristics (elongation etc.). For attaining a balance between curability and physical characteristics, it is also possible to use the one in which d is 2 (e.g. dimethoxy function) and the one in which d is 3 (e.g. trimethoxy function) in combination.

The crosslinkable functional group (X) occurs at a terminus of the acrylic block copolymer.

The "terminus of the acrylic block copolymer" means the terminus of a terminal block in the structure of the acrylic block copolymer (linear block copolymer or branched (star-like) block copolymer).

In the fields of application where rubber-like properties are required, at least one of the crosslinkable functional groups preferably occurs at the terminal of a terminal block since the molecular weight between crosslinking sites, which greatly influence the rubber elasticity, can then be increased; it is more preferred that each of all the crosslinkable functional groups occur at the terminus of a terminal block.

<Method of producing acrylic block copolymers>

In accordance with the invention, the method of synthesizing the acrylic block copolymer is not particularly limited, and the controlled radical polymerization technique may be used. Further, among controlled radical polymerization techniques, the living radical polymerization technique is more preferred, and the atom transfer radical polymerization technique is particularly preferred. These techniques are described below.

<u>Controlled radical polymerization</u>

Radical polymerization processes are classified into a general radical polymerization process (free radical polymerization process) in which a monomer having a specified functional group and a vinyl monomer are simply copolymerized using an azo compound, a peroxide, or the like as a polymerization initiator, and a controlled radial polymerization process in which a specified functional group can be introduced at a controlled position such as an end or the like.

The general radical polymerization process is a simple process, and a monomer having a specified functional group can be introduced into a polymer only stochastically. When a polymer with high functionality is desired, therefore, a considerable amount of a monomer must be used. Conversely, use of a small amount of a monomer has the problem of increasing the ratio of a polymer in which the specified functional group is not introduced. There is also the problem of producing only a polymer with a wide molecular weight distribution and high viscosity due to free radical polymerization.

The controlled radical polymerization process is further classified into a chain transfer agent process in which polymerization is performed using a chain transfer agent having a specified functional group to produce a vinyl polymer

having the functional group at an end, and a living radical polymerization process in which polymerization propagation termini propagate without causing termination reaction or the like to produce a polymer having a molecular weight substantially equal to the design.

The chain transfer agent process is capable of producing a polymer with high functionality, but a considerable amount of a chain transfer agent having a specified functional group must be used relative to the initiator, thereby causing an economical problem of the cost including the treatment cost. Like the general radical polymerization process, the chain transfer agent process also has the problem of producing only a polymer with a wide molecular weight distribution and high viscosity because it is free radical polymerization.

It is true that the living radical polymer process belongs to a radical polymerization process which has a high polymerization rate and is difficult to control because termination reaction easily occurs due to radical coupling or the like. However, unlike in the above-mentioned processes, in the living radical polymerization process, termination reaction little occurs, a polymer having a narrow molecular weight distribution (Mw/Mn of about 1.1 to 1.5) can be produced, and the molecular weight can be freely controlled by changing the charge ratio of the monomer to the initiator.

Therefore, the living radical polymerization process is capable of producing a polymer with a narrow molecular weight distribution and low viscosity and introducing a monomer having a specified functional group into a substantially desired position. Thus, this process is more preferred as a process for producing the vinyl polymer having the specified functional group.

In a narrow sense, "living polymerization" means polymerization in which molecular chains propagate while maintaining activity at the termini. However, the living polymerization generally includes pseudo-living polymerization in which molecular chains propagate in equilibrium between deactivated and activated termini. The definition in the present invention includes the latter.

In recent, the living radical polymerization has been actively studied by various groups. Examples of studies include a process using a cobalt porphyrin complex, as shown in Journal of American Chemical Society (J. Am. Chem. Soc.), 1994, vol. 116, p. 7943, a process using a radical capping agent such as a nitroxide compound, as shown in Macromolecules, 1994, vol. 27, p. 7228, and an atom transfer radical polymerization (ATRP) process using an organic halide or the like as an initiator and a transition metal complex as a catalyst.

In the present invention, any one of these living radical polymerization processes may be used without limitation, but the atom transfer radical polymerization process is preferred.

Next, the living radical polymerization will be described.

First, the process using a nitroxide compound and the like as a radical capping agent will be described. This polymerization process generally uses stable nitroxy free radical (=N-O·) as a radical capping agent. Preferred examples of such a compound include, but not limited to, nitroxy free radicals produced from cyclic hydroxyamines, such as 2,2,6,6-substituted-1-piperidinyloxy radical and 2,2,5,5-substituted-1-pyrroridinyloxy radical. As a substituent, an alkyl group having 4 or less carbon atoms, such as methyl or ethyl, is suitable. Specific examples of a nitroxy free radical compound include, but not limited to, 2,2,6,6-tetramethyl-1-piperidinyloxy radical (TEMPO), 2,2,6,6-tetraethyl-1-piperidinyloxy radical, 2,2,6,6-tetramethyl-4-oxo-1-piperidinyloxy radical, 2,2,5,5-tetramethyl-1-pyrrolidinyloxy radical, 1,1,3,3-tetramethyl-2-isoindolinyloxy radical, and N, N-di-tert-butylaminoxy radical. Instead of the nitroxy free radical, stable free radical such as galvinoxyl free radical may be used.

The radical capping agent is used in combination with the radical generator. The reaction product of the radical capping agent and the radical generator possibly servers as a polymerization initiator to promote polymerization of an addition-polymerizable monomer. The ratio between both agents used is not particularly limited, but the amount of the radical generator is preferably 0.1 to 10 moles per mole of the radical initiator.

As a radical generator, any one of various compounds can be used, but a peroxide capable of generating radical under a polymerization temperature is preferred. Examples of the peroxide include, but not limited to, diacyl peroxides, such as benzoyl peroxide and lauroyl peroxide; dialkyl peroxides, such as dicumyl peroxide and di-tert-butyl peroxide; peroxycarbonates, such as diisopropyl peroxydicarbonate and bis(4-tert-butylcyclohexyl)peroxydicarbonate; and alkyl peresters, such as tert-butyl peroxyoctoate and tert-butyl peroxybenzoate. In particular, benzoyl peroxide is preferred. Instead of the peroxide, a radical generator such as a radical generating azo compound, e.g., azobisisobutyronitrile, may be used.

As reported in Macromolecules, 1995, 28, 2993, the alkoxyamine compound represented by the following formula may be used as the initiator instead of a combination of the radical capping agent and the radical generator.

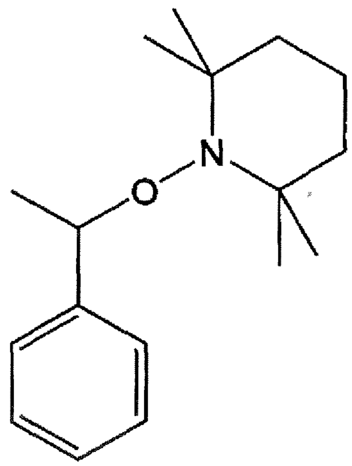

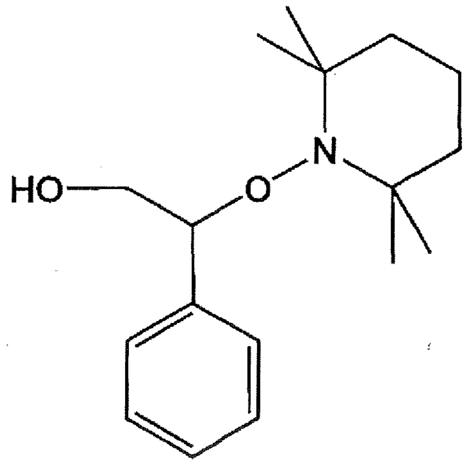

When the alkoxyamine compound is used as the initiator, the use of a compound having a functional group such as a hydroxyl group as shown in the above formula produces a polymer having the functional group at an end. When this compound is used in the method of the present invention, a polymer having the functional group at an end is produced.

The conditions of polymerization using the nitroxide compound and/or the like as the radical capping agent, such as the monomer, the solvent, the polymerization temperature, and the like, are not limited. However, these conditions may be the same as those in atom transfer radical polymerization which will be described below.

Atom transfer radical polymerization

Next, the atom transfer radical polymerization suitable as the living radical polymerization of the present invention will be described.

The atom transfer radical polymerization process has the above-mentioned characteristics of the living radical polymerization and also has the characteristic that a terminus has a halogen or the like, which is relatively useful for functional group conversion reaction, and the initiator and catalyst have high degrees of design freedom. Therefore, the atom transfer radical polymerization process is more preferred as a process for producing a vinyl polymer having a specified functional group. Examples of the atom transfer radical polymerization process include the processes disclosed in Matyjaszewski, et al., Journal of American Chemical Society (J. Am. Chem. Soc.), 1995, vol. 117, p. 5614, Macromolecules, 1995, vol. 28, p. 7901, Science, 1996, vol. 272, p. 866, WO96/30421, WO97/18247, WO98/01480 and WO98/40415, Sawamoto, et al., Macromolecules, 1995, vol. 28, p. 1721, and Japanese Kokai Publication Hei-09-208616 and Japanese Kokai Publication Hei-08-41117.

The atom transfer radical polymerization uses, as the initiator, an organic halide, particularly an organic halide having a highly reactive carbon-halogen bond (e.g., a carbonyl compound having a halogen at an $\alpha$-position, or a compound having a halogen at a benzyl position), or a halogenated sulfonyl compound.

Specific examples of such a compound include the following:

$C_6H_5$-$CH_2X$, $C_6H_5$-C (H) (X) $CH_3$, and $C_6H_5$-C (X) $(CH_3)_2$

(wherein $C_6H_5$ is a phenyl group, X is chlorine, bromine, or iodine);

$R^1$-C(H) (X)-$CO_2R^2$, $R^1$-C($CH_3$) (X)-$CO_2R^2$, $R^1$-C(H) (X)-C(O)$R^2$, and $R^1$-C($CH_3$) (X)-C(O)$R^2$

(wherein $R^1$ and $R^2$ each is a hydrogen atom or an alkyl group, an aryl group, or an aralkyl group containing 1 to 20 carbon atoms; X is chlorine, bromine, or iodine); and

$R^1$-$C_6H_4$-$SO_2X$

(wherein, in each formulae described above, $R^1$ is a hydrogen atom or an alkyl group, an aryl group, or an aralkyl group containing 1 to 20 carbon atoms; X is chlorine, bromine, or iodine).

As the initiator of the atom transfer radical polymerization, an organic halide or halogenated sulfonyl compound having a functional group other than a functional group which initiates polymerization can be used. In this case, the resultant vinyl polymer has the functional group at one of the main chain ends and a polymerization propagation terminal-structure of atom transfer radical polymerization at the other end. Examples of such a functional group include alkenyl, crosslinkable silyl, hydroxyl, epoxy, amino, and amido group.

Examples of an organic halide having an alkenyl group include, but not limited to, compounds having the structure represented by the general formula 2:

$$R^4R^5C(X)-R^6-R^7-C(R^3)=CH_2 \quad (2)$$

(wherein $R^3$ is a hydrogen atom or a methyl group; $R^4$ and $R^5$ each is a hydrogen atom, an alkyl group, an aryl group or an aralkyl group containing 1 to 20 carbon atoms, or $R^4$ and $R^5$ are bonded together at the other ends; $R^6$ is -C(O)O- (ester group), -C(O)-(keto group), or an o-, m-, or p-phenylene group; $R^7$ is a direct bond or a divalent organic group containing 1 to 20 carbon atoms, which may contain at least one ether bond; and X is chlorine, bromine, or iodine).

Specific examples of substituents $R^4$ and $R^5$ include hydrogen, methyl, ethyl, n-propyl, isopropyl, butyl, pentyl, and hexyl group. Substituents $R^4$ and $R^5$ may be bonded together at the other ends to form a cyclic skeleton.

Specific examples of an alkenyl group-containing organic halide represented by the general formula 2 are the following:
$XCH_2C(O)O(CH_2)_nCH=CH_2$,
$H_3CC(H)(X)C(O)O(CH_2)_nCH=CH_2$,
$(H_3C)_2C(X)C(O)O(CH_2)_nCH=CH_2$,
$CH_3CH_2C(H)(X)C(O)O(CH_2)_nCH=CH_2$, and

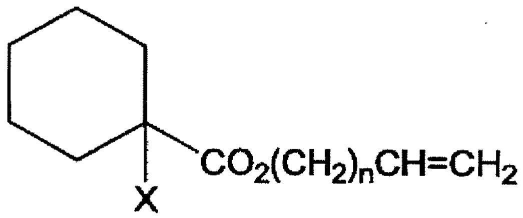

(wherein X is chlorine, bromine, or iodine, and n is an integer of 0 to 20);
$XCH_2C(O)O(CH_2)_nO(CH_2)_mCH=CH_2$,
$H_3CC(H)(X)C(O)O(CH_2)_nO(CH_2)_mCH=CH_2$,
$(H_3C)_2C(X)C(O)O(CH_2)_nO(CH_2)_mCH=CH_2$,
$CH_3CH_2C(H)(X)C(O)O(CH_2)_nO(CH_2)CH=CH_2$, and

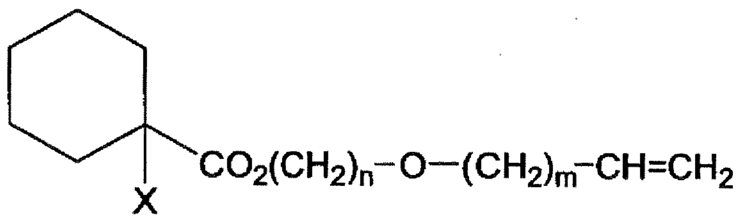

(wherein X is chlorine, bromine, or iodine, n is an integer of 1 to 20, and m is an integer of 0 to 20);
o, m, p-$XCH_2$-$C_6H_4$-$(CH_2)_n$-$CH=CH_2$,
o, m, p-$CH_3C(H)(X)$-$C_6H_4$-$(CH_2)_n$-$CH=CH_2$, and
o, m, p-$CH_3CH_2C(H)(X)$-$C_6H_4$- $(CH_2)_n$-$CH=CH_2$
(wherein X is chlorine, bromine, or iodine, and n is an integer of 0 to 20);
o, m, p-$XCH_2$-$C_6H_4$-$(CH_2)_n$-O-$(CH_2)_m$-$CH=CH_2$,
o, m, p-$CH_3C(H)(X)$-$C_6H_4$-$(CH_2)_n$-O-$(CH_2)_m$-$CH=CH_2$, and
o, m, p-$CH_3CH_2C(H)(X)$-$C_6H_4$-$(CH_2)_n$-O-$(CH_2)CH=CH_2$
(wherein X is chlorine, bromine, or iodine, n is an integer of 1 to 20, and m is an integer of 0 to 20);
o, m, p-$XCH_2$-C6H4-O-$(CH_2)_n$-$CH=CH_2$,
o, m, p-$CH_3C(H)(X)$-$C_6H_4$-O-$(CH_2)_n$-$CH=CH_2$, and
o, m, p-$CH_3CH_2C(H)(X)$-$C_6H_4$-O-$(CH_2)_n$-$CH=CH_2$
(wherein X is chlorine, bromine, or iodine, and n is an integer of 0 to 20); and
o, m, p-$XCH_2$-$C_6H_4$-O-$(CH_2)_n$-O-$(CH_2)_m$-$CH=CH_2$,
o, m, p-$CH_3C(H)(X)$-$C_6H_4$-O-$(CH_2)_n$-O-$(CH_2)_m$-$CH=CH_2$, and
o, m, p-$CH_3CH_2C(H)(X)$-$C_6H_4$-O-$(CH_2)_n$-O-$(CH_2)_m$-$CH=CH_2$
(wherein X is chlorine, bromine, or iodine, n is an integer of 1 to 20, and m is an integer of 0 to 20).

Other examples of an organic halide having an alkenyl group include compounds represented by the general formula 3:

$$H_2C=C(R^3)\text{-}R^7\text{-}C(R^4)(X)\text{-}R^8\text{-}R^5 \qquad (3)$$

(wherein $R^3$, $R^4$, $R^5$, $R^7$, and X represent the same as the above, and $R^8$ represents a direct bond or -C(O)O- (ester group), -C(O)- (keto group), or an o-, m-, or p-phenylene group).

$R^6$ is a direct bond or a divalent organic group containing 1 to 20 carbon atoms (which may contain at least one ether bond) . When $R^7$ is a direct bond, the compound is a halogenated allyl compound in which a vinyl group is bonded to the carbon bonded to a halogen. In this case, the carbon-halogen bond is activated by the adjacent vinyl group, and thus a C(O)O or phenylene group is not necessarily required as $R^8$, and a direct bond may be present. When $R^7$ is not a direct bond, $R^8$ is preferably a C(O)O, C(O), or phenylene group for activating the carbon-halogen bond.

Specific examples of the compounds represented by the general formula 3 include the following:
$CH_2=CHCH_2X$, $CH_2=C(CH_3)CH_2X$, $CH_2=CHC(H)(X)CH_3$,
$CH_2=C(CH_3)C(H)(X)CH_3$, $CH_2=CHC(X)(CH_3)_2$, $CH_2=CHC(H)(X)C_2H_5$,
$CH_2=CHC(H)(X)CH(CH_3)_2$, $CH_2=CHC(H)(X)C_6H_5$, $CH_2=CHC(H)(X)CH_2C_6H_5$, $CH_2=CHCH_2C(H)(X)\text{-}CO_2R$, $CH_2=CH(CH_2)_2C(H)(X)\text{-}CO_2R$,
$CH_2=CH(CH_2)_3C(H)(X)\text{-}CO_2R$, $CH_2=CH(CH_2)_8C(H)(X)\text{-}CO_2R$,
$CH_2=CHCH_2C(H)(X)\text{-}C_6H_5$, $CH_2=CH(CH_2)_2C(H)(X)\text{-}C_6H_5$, and
$CH_2=CH(CH_2)_3C(H)(X)\text{-}C_6H_5$
(wherein X is chlorine, bromine, or iodine, and R is an alkyl, aryl, or aralkyl group containing 1 to 20 carbon atoms).

Specific examples of a halogenated sulfonyl compound having an alkenyl group include the following:
o-, m-, p-$CH_2=CH\text{-}(CH_2)_n\text{-}C_6H_4\text{-}SO_2X$, and
o-, m-, p-$CH_2=CH\text{-}(CH_2)_n\text{-}O\text{-}C_6H_4\text{-}SO_2X$
(wherein X is chlorine, bromine, or iodine, and n is an integer of 0 to 20).

Specific examples of an organic halide having a crosslinkable silyl group include, but not limited to, compounds with a structure represented by the general formula 4:

$$R^4R^5C(X)\text{-}R^6\text{-}R^7\text{-}C(H)(R^3)CH_2\text{-}[Si(R^9)_{2-b}(Y)_bO]_m\text{-}Si(R^{10})_{3-a}(Y)_a \qquad (4)$$

(wherein $R^3$, $R^4$, $R^5$, $R^6$, $R^7$ and X represent the same as the above, and $R^9$ and $R^{10}$ are same or different and each represents an alkyl group containing 1 to 20 carbon atoms, an aryl group containing 6 to 20 carbon atoms or an aralkyl group containing 7 to 20 carbon atoms, or a triorganosiloxy group represented by $(R')_3SiO$- (the three R' s each is a monovalent hydrocarbon group containing 1 to 20 carbon atoms and may be the same or different); when two or more groups $R^9$ or $R^{10}$ are present, they may be the same or different; Y represents a hydroxyl group or a hydrolyzable group, and when two or more groups Y are present, they may be the same or different; a represents 0, 1, 2, or 3; b represents 0, 1, or 2; m is an integer of 0 to 19; and $a + mb \geq 1$ is satisfied).

Specific examples of the compounds represented by the general formula 4 include the following:
$XCH_2C(O)O(CH_2)_nSi(OCH_3)_3$,
$CH_3C(H)(X)C(O)O(CH_2)_nSi(OCH_3)_3$,
$(CH_3)_2C(X)C(O)O(CH_2)_nSi(OCH_3)_3$,
$XCH_2C(O)O(CH_2)_nSi(CH_3)(OCH_3)_2$,
$CH_3C(H)(X)C(O)O(CH_2)Si(CH_3)(OCH_3)_2$, and
$(CH_3)_2C(X)C(O)0(CH_2)_nSi(CH_3)(OCH_3)_2$
(wherein X is chlorine, bromine, or iodine, and n is an integer of 0 to 20);
$XCH_2C(O)O(CH_2)_nO(CH_2)_mSi(OCH_3)_3$,
$H_3CC(H)(X)C(O)O(CH_2)_nO(CH_2)_mSi(OCH_3)_3$,
$(H_3C)_2C(X)C(O)O(CH_2)_nO(CH_2)_mSi(OCH_3)_3$,
$CH_3CH_2C(H)(X)C(O)O(CH_2)_nO(CH_2)_mSi(OCH_3)_3$,
$XCH_2C(O)O(CH_2)_nO(CH_2)_mSi(CH_3)(OCH_3)_2$,
$H_3CC(H)(X)C(O)O(CH_2)_nO(CH_2)_m\text{-}Si(CH_3)(OCH_3)$,
$(H_3C)_2C(X)C(O)O(CH_{2n}O(CH_2)_m\text{-}Si(CH_3)(OCH_3)_2$, and
$CH_3CH_2C(H)(X)C(O)O(CH_2)_nO(CH_2)_m\text{-}Si(CH_3)(OCH_3)_2$,
(wherein X is chlorine, bromine, or iodine, n is an integer of 1 to 20, and m is an integer of 0 to 20); and
o,m,p-$XCH_2\text{-}C_6H_4\text{-}(CH_2)_2Si(OCH_3)_3$,
o,m,p-$CH_3C(H)(X)\text{-}C_6H_4\text{-}(CH_2)_2Si(OCH_3)_3$,
o,m,p-$CH_3CH_2C(H)(X)\text{-}C_6H_4\text{-}(CH_2)_2Si(OCH_3)_3$,
o,m,p-$XCH_2\text{-}C_6H_4\text{-}(CH_2)_3Si(OCH_3)_3$,

o,m,p-$CH_3C(H)(X)-C_6H_4-(CH_2)_3Si(OCH_3)_3$,
o,m,p-$CH_3CH_2C(H)(X)-C_6H_4-(CH_2)_3Si(OCH_3)_3$,
o,m,p-$XCH_2-C_6H_4-(CH_2)_2-O-(CH_2)_3Si(OCH_3)_3$,
o,m,p-$CH_3C(H)(X)-C_6H_4-(CH_2)_2-O-(CH_2)_3Si(OCH_3)_3$,
o,m,p-$CH_3CH_2C(H)(X)-C_6H_4-(CH_2)_2-O-(CH_2)_3Si(OCH3)_3$,
o,m,p-$XCH_2-C_6H_4-O-(CH_2)_3Si(OCH_3)_3$,
o,m,p-$CH_3C(H)(X)-C_6H_4-O-(CH_2)_3Si(OCH_3)_3$,
o,m,p-$CH_3CH_2C(H)(X)-C_6H_4O-(CH_2)_3-Si(OCH_2)_3$,
o,m,p-$XCH_2-C_6H_4-O-(CH_2)_2-O-(CH_2)_3-Si(OCH_3)_3$,
o,m,p-$CH_3C(H)(X)-C_6H_4-O-(CH_2)_2-O-(CH_2)_3Si(OCH_3)$,and
o,m,p-$CH_2CH_2C(H)(X)-C_6H_4O-(CH_2)_2-O-(CH_2)_3Si(OCH_3)_3$
(wherein X is chlorine, bromine, or iodine).

Other examples of the organic halide having a crosslinkable silyl group include compounds with a structure represented by the general formula 5:

$$(R^{10})_{3-a}(Y)_aSi-[OSi(R^9)_{2-b}(Y)b]_m-CH_2-C(H)(R^3)-R^7-C(R^4)(X)-R^8-R^5 \qquad (5)$$

(wherein $R^3$, $R^4$, $R^5$, $R^7$ $R^8$, $R^9$ $R^{10}$, a, b, m, X and Y represent the same as the above).

Specific examples of such compounds include the following:
$(CH_3O)_3SiCH_2CH_2C(H)(X)C_6H_5$,
$(CH_3O)_2(CH_3)SiCH_2CH_2C(H)(X)C_6H_5$,
$(CH_3O)_3Si(CH_2)_2C(H)(X)-CO_2R$,
$(CH_3O)_2(CH_3)Si(CH_2)_2C(H)(X)-CO_2R$,
$(CH_3O)_3Si(CH_2)_3C(H)(X)-CO_2R$,
$(CH_3O)_2(CH_3)Si(CH_2)_3C(H)(X)-CO_2R$,
$(CH_3O)_3Si(CH_2)_4C(H)(X)-CO_2R$,
$(CH_3O)_2(CH_3)Si(CH_2)_4C(H)(X)-CO_2R$,
$(CH_3O)_3Si(CH_2)_9C(H)(X)-CO_2R$,
$(CH_3O)_2(CH_3)Si(CH_2)_9C(H)(X)-CO_2R$,
$(CH_3O)_3Si(CH_2)_3C(H)(X)-C_6H_5$,
$(CH_3O)_2(CH_3)Si(CH_2)_3C(H)(X)-C_6H_5$,
$(CH_3O)_3Si(CH_2)_4C(H)(X)-C_6H_5$, and
$(CH_3O)_2(CH_3)Si(CH_2)_4C(H)(X)-C_6H_5$
(wherein X is chlorine, bromine, or iodine, and R is alkyl, aryl, or aralkyl group containing 1 to 20 carbon atoms).

Examples of the hydroxyl group-containing organic halide or halogenated sulfonyl compound include, but not limited to, the following:
$HO-(CH_2)_n-OC(O)C(H)(R)$ (X)
(wherein X is chlorine, bromine, or iodine, R is a hydrogen atom or alkyl, aryl, or aralkyl group containing 1 to 20 carbon atoms, and n is an integer of 1 to 20).

Examples of the amino group-containing organic halide or halogenated sulfonyl compound include, but not limited to, the following:
$H_2N-(CH_2)_n-OC(O)C(H)(R)$ (X)
(wherein X is chlorine, bromine, or iodine, R is a hydrogen atom or alkyl, aryl, or aralkyl group containing 1 to 20 carbon atoms, and n is an integer of 1 to 20).

Examples of the epoxy group-containing organic halide or halogenated sulfonyl compound include, but not limited to, the following:

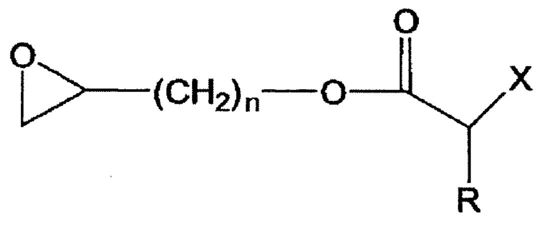

(wherein X is chlorine, bromine, or iodine, R is a hydrogen atom or alkyl, aryl, or aralkyl group containing 1 to 20 carbon atoms, and n is an integer of 1 to 20).

In order to obtain a polymer having at least two polymerization propagation terminal structures per molecule, an organic halide or halogenated sulfonyl compound having at least two initiation points is preferably used as the initiator. Examples of such a compound include the following:

o,m,p-X-$CH_2$-$C_6H_4$-$CH_2$-X

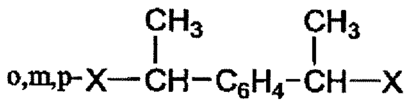

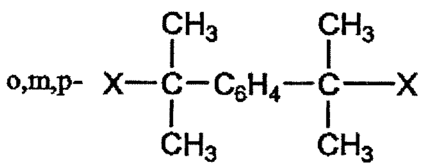

(wherein $C_6H_4$ is a phenylene group, and X is chlorine, bromine, or iodine.)

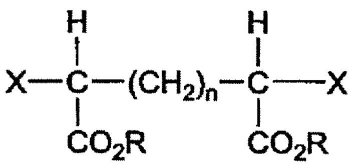

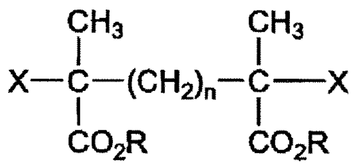

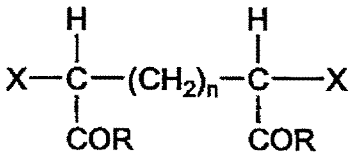

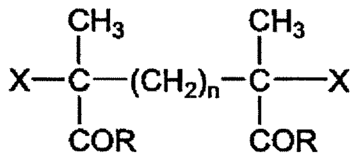

(wherein R is an alkyl, aryl, or aralkyl group containing 1 to 20 carbon atoms, n is an integer of 0 to 20, and X is chlorine, bromine, or iodine.)

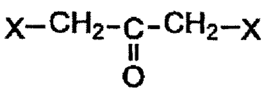

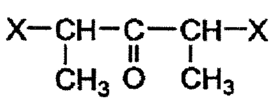

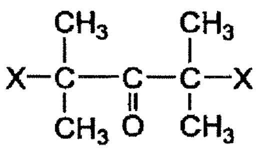

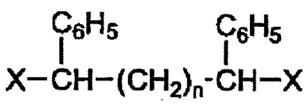

(wherein X is chlorine, bromine, or iodine, and n is an integer of 0 to 20.)

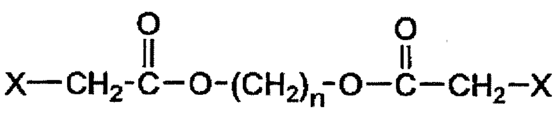

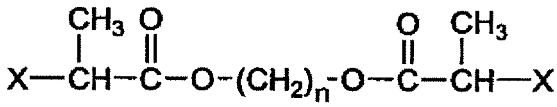

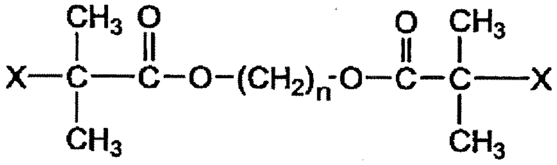

(wherein n is an integer of 1 to 20, and X is chlorine, bromine, or iodine.)

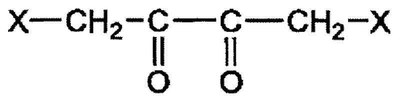

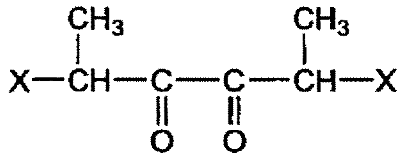

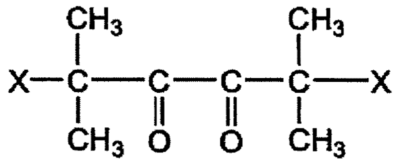

o,m,p- 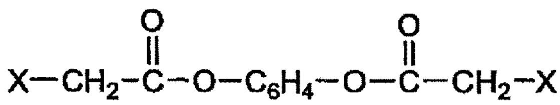

o,m,p- 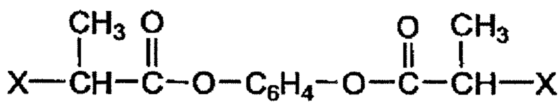

o,m,p- 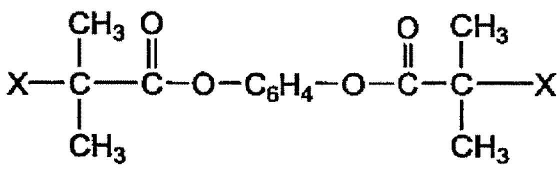

o,m,p- $X\text{-}SO_2\text{-}C_6H_4\text{-}SO_2\text{-}X$

(wherein X is chlorine, bromine, or iodine.)

The vinyl monomer used in the polymerization is not particularly limited, and any of the compounds listed above can be preferably used.

The transition metal complex used as the polymerization catalyst is not particularly limited, but a metal complex composed of a VII, VIII, IX, X, or XI group element in the periodic table as a central metal is preferred. A complex of zero-valent copper, monovalent copper, divalent ruthenium, divalent iron, or divalent nickel is more preferred. Among these complexes, a copper complex is most preferred. Specific examples of a monovalent copper compound include cuprous chloride, cuprous bromide, cuprous iodide, cuprous cyanide, cuprous oxide, and cuprous perchlorate. When a copper compound is used, a ligand, such as 2,2'-bipyridyl or its derivative, 1,10-phenanthroline or its derivative, or

polyamine, e.g., tetramethylethylenediamine, pentamethyldiethylenetriamine, or hexamethyl tris (2-aminoethyl) amine, is added for increasing catalyst activity. As a ligand, nitrogen-containing compounds are preferred, chelate nitrogen compounds are more preferred, N,N,N',N",N"-pentamethyldiethylenetriamine is further preferred. Also, a tristriphenylphosphine complex ($RuCl_2$ $(PPh_3)_3$) of divalent ruthenium chloride is suitable as the catalyst. When a ruthenium compound is used as a catalyst, an aluminum alkoxide is added as an activator. Furthermore, a bistriphenylphosphine complex ($FeCl_2(PPh_3)_2$) of divalent iron, a bistriphenylphosphine complex ($NiCl_2(PPh_3)_2$) of divalent nickel, or a bistributylphosphine complex ($NiBr_2(PBu_3)_2$) of divalent nickel is preferred as the catalyst.

The polymerization can be performed without a solvent or in any of various solvents. Examples of the solvent include hydrocarbon solvents, such as benzene and toluene; ether solvents, such as diethyl ether and tetrahydrofuran; halogenated hydrocarbon solvents, such as methylene chloride and chloroform; ketone solvents, such as acetone, methyl ethyl ketone, and methyl isobutyl ketone; alcohol solvents, such as methanol, ethanol, propanol, isopropanol, n-butyl alcohol, and tert-butyl alcohol; nitrile solvents, such as acetonitrile, propionitrile, and benzonitrile; ester solvents, such as ethyl acetate and butyl acetate; and carbonate solvents, such as ethylene carbonate and propylene carbonate. These solvents can be used alone or as a mixture of two or more. The polymerization can be performed in a supercritical medium such as a supercritical fluid $CO_2$.

The polymerization can be performed in a range of 0°C to 200°C, and preferably 50°C to 150°C without any purpose of restriction.

The atom transfer radical polymerization of the invention includes so called reverse atom transfer radical polymerization. The reverse atom transfer radical polymerization is a method comprising reacting an ordinary atom transfer radical polymerization catalyst in its high oxidation state resulting from radical generation, for example Cu (II') when Cu (I) is used as the catalyst, with an ordinary radical initiator, such as a peroxide, to thereby bring about an equilibrium state like in atom transfer radical polymerization (cf. Macromolecules, 1999, 32, 2872).

<Method of producing block structures>

As the method of producing block copolymers by such a technique of polymerization as mentioned above, there may be mentioned, among others, the method comprising adding monomers in succession, the method comprising synthesizing a polymer in advance and polymerizing a next block using the polymer as a polymer initiator, and the method comprising binding polymers separately prepared by polymerization. Any of these methods may be used for the production and an appropriate one may be selected according to the intended purpose. From the simplicity of production process viewpoint, the method comprising adding monomers in succession is preferred and, for avoiding the case of an earlier block monomer remaining and being copolymerized with the next block, the method comprising synthesizing a polymer in advance and polymerizing the next block using the polymer as a polymer initiator is preferred.

In the following, the case of successive addition of monomers and the case of next block polymerization using a polymer synthesized in advance as a polymer initiator are described in detail. These cases are, however, by no means limitative of the process for producing the acrylic block copolymer of the invention.

In the case of successive addition of monomers, it is desirable that the monomer to be polymerized next be charged at the point of time of arrival of the conversion of the monomer charged for earlier polymerization at 80 to 99%. When the earlier polymerization is allowed to proceed to a conversion exceeding 99%, the polymer chain growth reaction is suppressed stochastically but it becomes easy for polymer radicals to react mutually, so that such side reactions as disproportionation, coupling and chain transfer tend to occur. When the monomer to be polymerized next is charged at the point of time of a conversion lower than 80% (e.g. 79% or lower), the monomer charged for earlier polymerization gets mixed with the monomer charged for next polymerization and undergoes copolymerization and this may cause a problem in certain instances.

As the method comprising synthesizing a polymer in advance and carrying out the polymerization for the next block using the polymer as a polymer initiator, there may be mentioned, for example, the method comprising once interrupting the polymerization in a living condition by lowering the temperature at a desired point of time in the polymerization for the first block, distilling off the residual first block monomer under reduced pressure and then adding the monomer for the second block. For the third and further block polymerizations, if desired, the same procedure as in the case of the second block may be followed. This method can avoid the copolymerization of the residual earlier block monomer in producing the second and further blocks by polymerization.

It is also possible to finish the reaction at a desired point of time in the polymerization for the first block, carrying out such a procedure as purification/separation according to need, and then carrying out the polymerization for the second block. In this case, the method of polymerization for the second block may be the same as or different from the method of polymerization for the first block. For the third and further block polymerizations, if desired, the same procedure as in the case of the second block may be followed. This method also can avoid the copolymerization of the residual earlier block monomer in producing the second and further blocks by polymerization.

Functional group introduction method

In the following, several methods of functional group introduction into the acrylic block copolymer of the present invention are described without any purpose of restriction.

As methods of synthesizing an acrylic block copolymer having at least one crosslinkable functional group (X), there may be mentioned, among others,

(A) the method which comprises subjecting a crosslinkable silyl group-containing hydrosilane compound to addition to an acrylic block copolymer having at least one alkenyl group in the presence of a hydrosilylation catalyst,
(B) the method which comprises reacting an acrylic block copolymer having at least one hydroxyl group with a compound having, in each molecule, a crosslinkable silyl group and a group capable of reacting with the hydroxyl group, such as an isocyanato group,
(C) the method which comprises subjecting a compound having, in each molecule, a polymerizable alkenyl group and a crosslinkable functional group to reaction in synthesizing an acrylic block copolymer by radical polymerization,
(D) the method which comprises subjecting a chain transfer agent having a crosslinkable functional group to reaction in synthesizing an acrylic block copolymer by radical polymerization, and
(E) the method which comprises reacting an acrylic block copolymer having at least one highly reactive carbon-halogen bond with a compound having, in each molecule, a crosslinkable functional group and a stable carbanion.

The acrylic block copolymer having at least one alkenyl group, which is to be used in the above method (A), can be obtained by various methods. Several methods of synthesis are mentioned below, without any purpose of restriction, however.

(A-a) Method comprising subjecting to reaction a compound having, in each molecule, a polymerizable alkenyl group together with a low polymerizability alkenyl group, such as one represented by the general formula 9 shown below as a second monomer in synthesizing an acrylic block copolymer by radical polymerization:

$$H_2C=C(R^{14})-R^{15}-C(R^{17})=CH_2 \qquad (9)$$

(wherein $R^{14}$ represents a hydrogen atom or a methyl group, $R^{15}$ represents -C(O)O- or an o-, m- or p-phenylene group, $R^{16}$ represents a direct bond or a divalent organic group containing 1 to 20 carbon atoms, which may contain one or more ether bonds, and $R^{17}$ represents a hydrogen atom, an alkyl group containing 1 to 20 carbon atoms, an aryl group containing 6 to 20 carbon atoms or an aralkyl group containing 7 to 20 carbon atoms).
The time when the compound having, in each molecule, a polymerizable alkenyl group together with a low polymerizability alkenyl group is subjected to reaction is not particularly restricted but, in particular in living radical polymerization and when rubber-like properties are expected, the compound is preferably subjected to reaction as a second monomer at the final stage of the polymerization reaction or after completion of the reaction of the employed monomers.
(A-b) Method comprising subjecting to reaction a compound having at least two low polymerizability alkenyl groups, for example 1,5-hexadiene, 1,7-octadiene or 1, 9-decadiene, at the final stage of the polymerization or after completion of the reaction of the monomers employed in acrylic block copolymer synthesis by living radical polymerization.
(A-c) Method comprising reacting an acrylic block copolymer having at least one highly reactive carbon-halogen bond with one of various alkenyl group-containing organometallic compounds, for example an organotin such as allyltributyltin or allyltrioctyltin, for substitution of the halogen.
(A-d) Method comprising reacting an acrylic block copolymer having at least one highly reactive carbon-halogen bond with a stabilized, alkenyl group-containing carbanion such as one represented by the general formula 10, for substitution of the halogen:

$$M^+C^-(R^{18})(R^{19})-R^{20}-C(R^{17})=CH_2 \qquad (10)$$

(wherein $R^{17}$ is as defined above, $R^{18}$ and $R^{19}$ each is an electron-withdrawing group capable of stabilizing the carbanion $C^-$ or one of them is such an electron-withdrawing group and the other represents a hydrogen atom, an alkyl group containing 1 to 10 carbon atoms or a phenyl group, $R^{20}$ represents a direct bond or a divalent organic group containing 1 to 10 carbon atoms, which may contain one or more ether bonds, and $M^+$ represents an alkali metal ion or a quaternary ammonium ion).
Particularly preferred as the electron-withdrawing group $R^{18}$ and/or $R^{19}$ are those which have a structure of $-CO_2R$, -C(O)R or -CN.
(A-e) Method comprising reacting an acrylic block copolymer having at least one highly reactive carbon-halogen

bond with a simple substance metal, such as zinc, or an organometallic compound and then reacting the thus-prepared enolate anion with an alkenyl group-containing, electrophilic compound, such as an alkenyl group-containing compound having a leaving group such as a halogen atom or an acetyl group, an alkenyl group-containing carbonyl compound, an alkenyl group-containing isocyanate compound or an alkenyl group-containing acid halide.
(A-f) Method comprising reacting an acrylic block copolymer having at least one highly reactive carbon-halogen bond with an alkenyl group-containing oxy anion or carboxylate anion such as one represented by the general formula 11 or 12, for substitution of the halogen:

$$H_2C=C(R^{17})-R^{21}-O^-M^+ \quad (11)$$

(wherein $R^{17}$ and $M^+$ are as defined above and $R^{21}$ is a divalent organic group containing 1 to 20 carbon atoms, which may contain one or more ether bonds);

$$H_2C=C(R^{17})-R^{22}-C(O)O^-M^+ \quad (12)$$

(wherein $R^{17}$ and $M^+$ are as defined above and $R^{22}$ is a direct bond or a divalent organic group containing 1 to 20 carbon atoms, which may contain one or more ether bonds).
The method of synthesizing the above-mentioned acrylic block copolymer having at least one highly reactive carbon-halogen bond includes, but is not limited to, atom transfer radical polymerization methods using an organic halide or the like as initiator and a transition metal complex as catalyst, as mentioned above.
It is also possible to obtain the acrylic block copolymer having at least one alkenyl group from an acrylic block copolymer having at least one hydroxyl group. As utilizable methods, there may be mentioned, for example, the following, without any purpose of restriction.
(A-g) Method comprising reacting the hydroxyl group of an acrylic block copolymer having at least one hydroxyl group with a base, such as sodium methoxide, followed by reaction with an alkenyl group-containing halide, such as allyl chloride.
(A-h) Method comprising reacting such hydroxyl group with an alkenyl group-containing isocyanate compound, such as allyl isocyanate.
(A-i) Method comprising reacting such hydroxyl group with an alkenyl group-containing acid halide, such as (meth) acrylic acid chloride, in the presence of a base, such as pyridine.
(A-j) Method comprising reacting such hydroxyl group with an alkenyl group-containing carboxylic acid, such as acrylic acid, in the presence of an acid catalyst.

In the practice of the present invention, when no halogen is directly involved in the alkenyl group introduction, as in the method (A-a) or (A-b), the acrylic block copolymer is preferably synthesized by living radical polymerization. From the viewpoint of ready controllability, the method (A-b) is more preferred.
In cases where alkenyl group introduction is effected by conversion of the halogen atom of an acrylic block copolymer having at least one highly reactive carbon-halogen atom, use is preferably made of an acrylic block copolymer having at least one terminal carbon-halogen bond, which is highly reactive, as obtained by subjecting a vinyl monomer to radical polymerization (atom transfer radical polymerization) using, as an initiator, an organic halide or halogenated sulfonyl compound having at least one highly reactive carbon-halogen bond and, as a catalyst, a transition metal complex. In view of easier controllability, the method (A-f) is more preferred.
The crosslinkable silyl group-containing hydrosilane compound is not particularly restricted but includes, as typical examples, compounds represented by the general formula 13.

$$H-[Si(R^9)_{2-b}(Y)_bO]_m-Si(R^{10})_{3-a}(Y)_a \quad (13)$$

{wherein $R^9$ and $R^{10}$ each represents an alkyl group containing 1 to 20 carbon atoms, an aryl group containing 6 to 20 carbon atoms, an aralkyl group containing 7 to 20 carbon atoms or a triorganosiloxy group represented by $(R')_3SiO-$ (in which R' is a univalent hydrocarbon group containing 1 to 20 carbon atoms and the three R' groups may be the same or different) and, when there are two or more $R^9$ or $R^{10}$ groups, they may be the same or different; Y represents a hydroxyl group or a hydrolyzable group and, when there are two or more Y groups, they may be the same or different; a represents 0, 1, 2 or 3, b represents 0, 1 or 2 and m is an integer of 0 to 19, provided that the relation $a + mb \geq 1$ should be satisfied}.
Particularly preferred among those hydrosilane compounds in view of ready availability are crosslinkable group-containing compounds represented by the general formula 14:

$$H-Si(R^{10})_{3-a}(Y)_a \quad (14)$$

(wherein $R^{10}$ and Y are as defined above; and a is an integer of 1 to 3).

In subjecting the above crosslinkable silyl-containing hydrosilane compound to addition to the alkenyl group, a transition metal catalyst is generally used. The transition metal catalyst includes, among others, simple substance platinum; solid platinum dispersed on a support such as alumina, silica or carbon black; chloroplatinic acid; chloroplatinic acid complexes with alcohols, aldehydes, ketones or the like; platinum-olefin complexes; and platinum(0)-divinyltetramethyldisiloxane complex. As other catalysts than platinum compounds, there may be mentioned $RhCl(PPh_3)_3$, $RhCl_3$, $RuCl_3$, $IrCl_3$, $FeCl_3$, $AlCl_3$, $PdCl_2 \cdot H_2O$, $NiCl_2$ and $TiCl_4$, for instance.

The method of producing the acrylic block copolymer having at least one hydroxyl group, which polymer is to be used in the methods (B) and (A-g) to (A-j), includes, but is not limited to, the following, among others.

(B-a) Method comprising subjecting to reaction, as a second monomer, a compound having both a polymerizable alkenyl group and a hydroxyl group in each molecule, for example one represented by the general formula 15 given below, in synthesizing the acrylic block copolymer by radical polymerization:

$$H_2C=C(R^{14})-R^{15}-R^{16}-OH \qquad (15)$$

(wherein $R^{14}$, $R^{15}$ and $R^{16}$ are as defined above).

The time for subjecting to reaction the compound having both a polymerizable alkenyl group and a hydroxyl group in each molecule is not critical but, in particular in living radical polymerization, when rubber-like properties are demanded, the compound is preferably subjected to reaction as a second monomer at the final stage of the polymerization reaction or after completion of the reaction of the employed monomer.

(B-b) Method comprising subjecting an alkenyl alcohol, such as 10-undecenol, 5-hexenol or allyl alcohol, to reaction at the final stage of polymerization reaction or after completion of the reaction of the employed monomer in synthesizing the acrylic block copolymer by living radical polymerization.

(B-c) Method comprising radical-polymerizing a vinyl monomer using a hydroxyl group-containing chain transfer agent, such as a hydroxyl group-containing polysulfide, in large amounts, as described in Japanese Kokai Publication Hei-05-262808, for instance.

(B-d) Method comprising subjecting a vinyl monomer to radical polymerization using hydrogen peroxide or a hydroxyl group-containing initiator, as described in Japanese Kokai Publication Hei-06-239912 and Japanese Kokai Publication Hei-08-283310, for instance.

(B-g) Method comprising reacting an acrylic block copolymer having at least one highly reactive carbon-halogen bond with a hydroxyl group-containing stabilized carbanion, such as one represented by the general formula 16 for substitution of the halogen atom:

$$M^+C^-(R^{18}) (R^{19})-R^{20}-OH \qquad (16)$$

(wherein $R^{18}$, $R^{19}$, $R^{20}$ and $M^+$ are as defined above) .

Particularly preferred as the electron-withdrawing groups $R^{18}$ and $R^{19}$ are those having a structure of $-CO_2R$, -C(O) R or -CN.

(B-h) Method comprising reacting an acrylic block copolymer having at least one highly reactive carbon-halogen bond with a simple substance metal, such as zinc, or an organometallic compound and then reacting the thus-prepared enolate anion with an aldehyde or ketone.

(B-i) Method comprising reacting an acrylic block copolymer having at least one highly reactive carbon-halogen bond with a hydroxyl group-containing oxy anion or carboxylate anion, such as one represented by the general formula 17 or 18 given below, for substitution of the halogen atom:

$$HO-R^{21}-O^-M^+ \qquad (17)$$

(wherein $R^{21}$ and $M^+$ are as defined above);

$$HO-R^{22}-C(O)O^-M^+ \qquad (18)$$

(wherein $R^{22}$ and $M^+$ are as defined above).

(B-j) Method comprising subj ecting, as a second monomer, a compound having a low polymerizable alkenyl group and a hydroxyl group in each molecule to reaction at the final stage of the polymerization reaction or after completion of the reaction of the employed monomer in synthesizing the acrylic block copolymer by living radical polymerization.

Such compound is not particularly restricted but may be a compound represented by the general formula 19, for instance:

$$H^2C=C(R^{14})-(R^{21})-OH \qquad (19)$$

(wherein $R^{14}$ and $R^{21}$ are as defined above).

The compound represented by the above general formula 19 is not particularly restricted but, in view of ready availability, alkenyl alcohols such as 10-undecenol, 5-hexenol and allyl alcohol are preferred.

In the practice of the present invention, when no halogen is directly involved in hydroxyl group introduction, as in the methods (B-a) to (B-e) and (B-j), the acrylic block copolymer is preferably synthesized by living radical polymerization. The method (B-b) is more preferred from the viewpoint of ease of control.

In cases where hydroxyl group introduction is effected by conversion of the halogen atom of an acrylic block copolymer having at least one highly reactive carbon-halogen atom, use is preferably made of an acrylic block copolymer having at least one terminal carbon-halogen bond, which is highly reactive, as obtained by subjecting a vinyl monomer to radical polymerization (atom transfer radical polymerization) using an organic halide or halogenated sulfonyl compound as an initiator and, as a catalyst, a transition metal complex. From the viewpoint of ease of control, the method (B-i) is more preferred.

As the compound having a crosslinkable silyl group and a group capable of reacting with a hydroxyl group, such as an isocyanato group, in each molecule, there may be mentioned, for example, γ-isocyanatopropyltrimethoxysilane, γ-isocyanatopropylmethyldimethoxysialne, γ-isocyanatopropyltriethoxysilane and the like. If necessary, any of urethane formation reaction catalysts generally known in the art can be used.

The compound having both a polymerizable alkenyl group and a crosslinkable functional group in each molecule, which is to be used in the method (C), includes, among others, trimethoxysilylpropyl (meth)acrylate, methyldimethoxysilylpropyl (meth)acrylate and like compounds represented by the general formula 20 given below:

$$H_2C=C(R^{14})-R^{15}-R^{23}[Si(R^9)_{2-b}(Y)_bO]_m-Si(R^{10})_{3-a}(Y)_a \qquad (20)$$

(wherein $R^9$, $R^{10}$, $R^{14}$, $R^{15}$, Y, a, b and m are as defined above and $R^{23}$ is a direct bond or a divalent organic group containing 1 to 20 carbon atoms, which may contain one or more ether bonds) .

The time for subjecting the compound having both a polymerizable alkenyl group and a crosslinkable functional group in each molecule is not critical but, in particular in living radical polymerization and when rubber-like properties are demanded, the compound is preferably subjected to reaction as a second monomer at the final stage of the polymerization reaction or after completion of the reaction of the employed monomer.

The chain transfer agent having a crosslinkable functional group, which is to be used in the chain transfer agent method (D), includes mercaptan having a crosslinkable silyl group, hydrosilane having a crosslinkable silyl group, and the like, described in Japanese Kokoku Publication Hei-03-14068, Japanese Kokoku Publication Hei-04-55444, for instance.

The method of synthesizing the acrylic block copolymer having at least one highly reactive carbon-halogen bond, which is to be used in the method (E), includes, but is not limited to, the atom transfer radical polymerization method which uses an organic halide or the like as an initiator and a transition metal complex as a catalyst.

As the compound having both a crosslinkable functional group and a stabilized carbanion in each molecule, there may be mentioned compounds represented by the general formula 21:

$$M^+C^-(R^{18})(R^{19})-R^{24}-C(H)(R^{25})-CH_2-[Si(R^9)_{2-b}(Y)_bO]_m-Si(R^{10})_{3-a}(Y) \qquad (21)$$

(wherein $R^9$, $R^{10}$, $R^{18}$, $R^{19}$, Y, a, b, m and $M^+$ are as defined above, $R^{24}$ is a direct bond or a divalent organic group containing 1 to 10 carbon atoms, which may contain one or more ether bonds, and $R^{25}$ represents a hydrogen atom, an alkyl group containing 1 to 10 carbon atoms, an aryl group containing 6 to 10 carbon atoms or an aralkyl group containing 7 to 10 carbon atoms). Particularly preferred as the electron-withdrawing groups $R^{18}$ and $R^{19}$ are those having a structure of $-CO_2R$, -C(O)R or -CN.

<After-treatment>

The reaction mixture obtained by polymerization comprises a mixture of the polymer and the metal complex, and the polymer can be purified according to need using such a treatment agent as an acid, base, oxidizing agent, reducing agent, adsorbent, filter aid, active carbon or ion exchange resin, for instance. The treatment agent may comprise one single species or a combination of two or more species. The polymer may be directly treated or in the form of a solution resulting form dilution with a solvent. Such treatment may be carried out at ordinary temperature or with cooling/heating. After contacting the polymer or polymer solution with such a treatment agent as mentioned above, the treatment agent is removed by filtration, centrifugation or sedimentation, for instance, if necessary followed by dilution and/or addition of water, to give the desired clear and transparent polymer solution. These treatments may be applied to the final product acrylic block copolymer and/or to the intermediate(s) for the production of that copolymer.

<<Reactive hot-melt adhesive composition>>

The acrylic block copolymer obtained in the above manner can suitably be used as a reactive hot-melt adhesive composition, although the use thereof is not particularly restricted to such.
On that occasion, one or more of various additives may be added according to need for further improving the characteristics of the reactive hot-melt adhesive composition.
As the additives, there may be mentioned antioxidants, ultraviolet absorbers, light stabilizers, antistatic agents, flame retardants, colorants, antifungal agents, antiaging agents, tackifiers, fillers, plasticizers and solvents, among others. These may be used singly or two or more of them may be used in combination. The addition amount of each additive is not particularly restricted but the additive may be added at a level sufficient to attain the desired physical characteristics.

<Antioxidant>

The antioxidant is not particularly restricted but includes, among others, monophenolic antioxidants such as 2,6-di-tert-butyl-p-cresol, butylated hydroxyanisole, 2,6-di-tert-butyl-4-ethylphenol and stearyl β-(3,5-di-tert-butyl-4-hydroxyphenyl)propionate; bisphenolic antioxidants such as 2,2'-methylenebis(4-methyl-6-tert-butylphenol), 2,2'-methylenebis(4-ethyl-6-tert-butylphenol), 4,4'-thiobis(3-methyl-6-tert-butylphenol), 4,4'-butylidenebis(3-methyl-6-tert-butylphenol) and 3,9-bis[1,1-dimethyl-2-[β-(3-tert-butyl-4-hydroxy-5-methylphenyl)propionyloxy]ethyl]-2,4,8,10-tetraoxaspiro [5.5]undecane; high-molecular phenolic antioxidants such as 1,1,3-tris(2-methyl-4-hydroxy-5-tert-butylphenyl)butane, 1,3,5-trimethyl-2,4,6-tris(3,5-di-tert-butyl-4-hydroxybenzyl)benzene, tetrakis[methylene-3-(3',5'-di-tert-butyl-4'-hydroxyphenyl) propionato]methane, bis[3,3'-bis(4'-hydroxy-3'-tert-butylphenyl)butyric acid] glycol ester, 1,3,5-tris(3',5'-di-tert-butyl-4'-hydroxybenzyl)-s-triazine -2,4,6(1H,3H,5H)-trione and tocopherols; sulfur-containing antioxidants such as dilauryl 3,3'-thiodipropionate, dimyristyl 3,3'-thiodipropionate and distearyl 3,3'-thiodipropionate; phosphorus-containing antioxidants such as triphenyl phosphite, diphenyl isodecyl phosphite, phenyl diisodecyl phosphite, 4,4'-butylidenebis (3-methyl-6-tert-butylphenyl ditridecyl) phosphite, tris(nonylphenyl) phosphite, tris(dinonylphenyl) phosphite, diisodecyl pentaerythritol diphosphite, 9,10-dihydro-9-oxa-10-phosphaphenanthrene 10-oxide, 10-(3,5-di-tert-butyl-4-hydroxybenzyl)-9,10-dihydro-9-oxa-10-phosphaphenanthrene 10-oxide, 10-decyloxy-9,10-dihydro-9-oxa-10-phosphaphenanthrene, tris(2,4-di-tert-butylphenyl) phosphite, cyclic neopentanetetrayl bis(2,4-di-tert-butylphenyl) phosphite, cyclic neopentanetetrayl bis(2,6-di-tert-butyl-4-methylphenyl) phosphite and 2,2'-methylenebis(4,6-di-tert-butylphenyl) octyl phosphite.
These may be used singly or two or more of them may be used in combination.

<Ultraviolet absorber>

The ultraviolet absorber is not particularly restricted but includes, among others, salicylate type ultraviolet absorbers such as phenyl salicylate, p-tert-butylphenyl salicylate and p-octylphenyl salicylate; benzophenone type ultraviolet absorbers such as 2,4-dihydroxybenzophenone, 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, 2,2'-dihydroxy-4,4'-dimethoxybenzophenone, 2-hydroxy-4-methoxy-5-sulfobenzophenone and bis (2-methoxy-4-hydroxy-5-benzoylphenyl) methane; benzotriazole type ultraviolet absorbers such as 2-(2'-hydroxy-5'-methylphenyl)benzotriazole, 2-(2'-hydroxy-5'-tert-butylphenyl)benzotriazole, 2-(2'-hydroxy-3',5'-di-tert-butylphenyl)benzotriazole, 2-(2'-hydroxy-3'-tert-butyl-5'-methylphenyl)-5-chlorobenzotriazole, 2-(2'-hydroxy-3',5'-di-tert-butylphenyl)-5-chlorobenzotriazole, 2-(2'-hydroxy-3',5'-di-tert-amylphenyl)benzotriazole, 2-(2'-hydroxy-4'-octoxyphenyl)benzotriazole, 2-[2'-hydroxy-3'-(3",4",5",6"-tetrahydrophthalimidomethyl)-5'-methylphenyl]benzotriazole, 2,2-methylenebis[4-(1,1,3,3-tetramethylbutyl)-6-(2H-benzotriazol-2-yl)phenol], [2-(2'-hydroxy-5'-methacryloxyphenyl)-2H-benzotriazole] and [2,2'-methylenebzs[4-(1,1,3,3-tetramethylbutyl)-6-[(2H-benzotriazol-2-yl)phenol]]]; cyanoacrylate type ultraviolet absorbers such as 2-ethylhexyl 2-cyano-3,3-diphenylacrylate and ethyl 2-cyano-3,3-diphenylacrylate; and nickel-containing ultraviolet absorbers such as nickel bis (octylphenyl) sulfide, [2,2'-thiobis(4-tert-octylphenolato)]-n-butylamine nickel, nickel complex 3,5-di-tert-butyl-4-hydroxybenzylphosphoric acid monoethylate and nickel dibutyldithiocarbamate.
These may be used singly or two or more of them may be used in combination.

<Light stabilizer>

The light stabilizer is not particularly restricted but includes, among others, hindered amine light stabilizers (HALSs) such as bis (2, 2, 6, 6-tetramethyl-4-piperidyl) sebacate, Sanol LS-770 (product of Sankyo Co., Ltd.), Adekastab LA-77 (product of Asahi Denka Co., Ltd.), Sumisorb 577 (product of Sumitomo Chemical Co., Ltd.), Biosorb 04 (product of Kyodo Chemical Co., Ltd.), Chimassorb 944 LD (product of Ciba Specialty Chemicals), Tinuvin 144 (product of Ciba Specialty Chemicals), Adekastab LA-52 (product of Asahi Denka Co., Ltd.), Adekastab LA-57 (product of Asahi Denka Co., Ltd.), Adekastab LA-67 (product of Asahi Denka Co., Ltd.), Adekastab LA-68 (product of Asahi Denka Co., Ltd.), Adekastab LA-77 (product of Asahi Denka Co., Ltd.), Adekastab LA-87 (product of Asahi Denka Co., Ltd.) and Goodrite UV-3034 (product of Goodrich).

These may be used singly or two or more of them may be used in combination.

<Antistatic agent>

The antistatic agent is not particularly restricted but includes, among others, nonionic antistatic agents such as poly(oxyethylene)alkylamines, poly(oxyethylene)alkylamides, poly(oxyethylene) alkyl ethers, poly(oxyethylene) alkyl phenyl ethers, glycerol fatty acid esters and sorbitan fatty acid esters; anionic antistatic agents such as alkylsulfonates, alkylbenzenesulfonates, alkyl sulfates and alkyl phosphates; cationic antistatic agents such as quaternary ammonium chlorides, quaternary ammonium sulfates and quaternary ammonium nitrates; amphoteric antistatic agents such as alkylbetaine compounds, alkylimidazoline compounds and alkylalanine compounds; and conductive resin type antistatic agents such as polyvinylbenzyl type cationic compounds and polyacrylic acid type cationic compounds.

These may be used singly or two or more of them may be used in combination.

<Flame retardant>

The flame retardant is not particularly restricted but includes, among others, halogen-containing flame retardants such as tetrabromobisphenol A, 2,2-bis(4-hydroxy-3,5-dibromophenyl)propane, hexabromobenzene, tris(2,3-dibromopropyl) isocyanurate, 2,2-bis(4-hydroxyethoxy-3,5-dibromophenyl)propane, decabromodiphenyl oxide and halogen-containing polyphosphates; phosphorus-containing flame retardants such as ammonium phosphate, tricresyl phosphate, triethyl phosphate, tris(β-chloroethyl) phosphate, tris(chloroethyl) phosphate, tris(dichloropropyl) phosphate, cresyl diphenyl phosphate, xylenyl diphenyl phosphate, acid phosphate esters, nitrogen-containing phosphorus compounds and red phosphorus; inorganic flame retardants such as tin oxide, antimony trioxide, zirconium hydroxide, barium metaborate, aluminum hydroxide and magnesium hydroxide; and siloxane type flame retardants such as poly(dimethoxysiloxane), poly(diethoxysiloxane), poly(diphenoxysiloxane), poly(methoxyphenoxysiloxane), methyl silicate, ethyl silicate and phenyl silicate.

These may be used singly or two or more of them may be used in combination.

<Colorant>

The colorant includes, but is not limited to, such colorants as powder colorants, granular colorants, liquid colorants and colorant-containing masterbatches. These may be used singly or two or more of them may be used in combination.

<Antifungal agent>

The antifungal agent includes, but is not limited to, such antifungal agents as Vinyzene, Preventol and thiabendazole. These may be used singly or two or more of them may be used in combination.

<Antiaging agent>

The antiaging agent is not particularly restricted but includes, among others, poly(2,2,4-trimethyl-1,2-dihydroquinoline), 6-ethoxy-1,2-dihydro-2,2,4-trimethylquinoline, 1-(N-phenylamino)naphthalene, styrenated diphenylamine, dialkyldiphenylamines, N,N'-diphenyl-p-phenylenediamine, N-phenyl-N'-isopropyl-p-phenylenediamine, N,N'-di-2-naphthyl-p-phenylenediamine, 2,6-dz-tert-butyl-4-methylphenol, mono(α-methylbenzyl)phenol, di(α-methylbenzyl)phenol, trz(α-methylbenzyl)phenol, 2,2'-methylenebis(4-methyl-6-tert-butylphenol), 2,2'-methylenebis(4-ethyl-6-tert-butylphenol), 4,4'-butylidenebis(6-tert-butyl-3-methylphenol), 4,4'-thiobis(6-tert-butyl-3-methylphenol), 1,1-bis(4-hydroxyphenyl) cyclohexane, 2,5-di-tert-butylhydroquinone, 2,5-di-tert-amylhydroquinone, 2-mercaptobenzimidazole, 2-mercaptobenzimidazole zinc salt, 2-mercaptomethylbenzimidazole, nickel dibutyldithiocarbamate, tris(nonylphenyl) phosphite, dilauryl thiodipropionate, distearyl thiodipropionate, Sunnoc (product of Ouchi Shinko Chemical Industrial Co., Ltd.), Suntight (product of Seiko Chemical Co., Ltd.) and Ozoguard G (product of Kawaguchi Chemical Industry Co., Ltd.).

These may be used singly or two or more of them may be used in combination.

<Tackifier>

The tackifier is not particularly restricted but includes, among others, Tackrol 101 (product of Taoka Chemical Co., Ltd.), Hitanol 1501 and Hitanol 5501 (products of Hitachi Chemical Co., Ltd.), phenol resins, modified phenol resins, modified alkylphenol-formaldehyde resins, cyclopentadiene-phenol resins, xylene resins, coumarone resins, petroleum resins, terpene resins, terpene-phenol resins and rosin ester resins.

A silane coupling agent and an adhesion promoter other than the silane coupling agent may further added. Examples of the silane coupling agent are isocyanato group-containing silanes such as γ-isocyanateopropyltrimethoxysilane, γ-isocyanateopropyltriethoxysilane, γ-isocyanateopropylmethyldiethoxysilane, and γ-isocyanateopropylmethyldimethoxysilane; amino group-containing silanes such as γ-aminopropyltrimethoxysilane, γ-aminopropyltriethoxysilane, γ-aminopropylmethyldiimethoxysilane, γ-aminopropylmethyldiethoxysilane, γ-(2-aminoethyl)aminopropyltrimethoxysilane, γ-(2-aminoethyl)aminopropylmethyldimethoxysilane, γ-(2-aminoethyl)aminopropyltriethoxysilane, γ-(2-aminoethyl) aminopropylmethyldiethoxysilane, γ-ureidopropyltrimethoxysilane, N-phenyl-γ-aminopropyltrimethoxysialne, N-benzyl-γ-aminopropyltrimethoxysilane and N-vinylbenzyl-γ-aminopropyltriethoxysilane; mercapto group-containing silanes such as γ-mercaptopropyltrimethoxysilane, γ-mercaptopropyltriethoxysilane, γ-mercaptopropylmethyldimethoxysilane and γ-mercaptopropylmethyldiethoxysilane; epoxy group-containing silanes such as γ-glycidoxypropyltrimethoxysilane, γ-glycidoxypropyltriethoxysilane, γ-glycidoxypropylmethyldimethoxysilane, β-(3,4-epoxycyclohexyl)ethyltrimethoxysilane and β-(3,4-epoxycyclohexyl)ethyltriethoxysilane; carboxysilanes such as β-carboxyethyltriethoxysilane, β-carboxyethylphenylbis(2-methoxyethoxy)silane and N-β-(carboxymethyl)aminoethyl-γ-aminopropyltrimethoxysilane ; vinyl unsaturated group-containing silanes such as vinyltrimethoxysilane, vinyltriethoxysilane, γ-methacryloyloxypropylmethyldimethoxysilane and γ-acryloyloxypropylmethyltriethoxysilane; halogen-containing silanes such as γ-chloropropyltrimethoxysilane; isocyanurate silanes such as tris(trimethoxysilyl)isocyanurate; and the like. Further, derivatives obtained by modifying the above-mentioned silane, for example, amino-modified silyl polymers, silylated aminopolymers, unsaturated aminosilane complexes, phenylamino long-chain alkylsilanes, amino-silylated silicones, silylated polyesters and the like may be usable as the silane coupling agent.

These may be used singly or two or more of them may be used in combination.

<Filler>

The fillers are not particularly limited and may include, for example, reinforcing fillers such as wood flour, pulp, cotton chips, asbestos, glass fiber, carbon fiber, mica, walnut shell flour, rice hull flour, graphite, china clay, kaolin, silica (e.g. fumed silica, precipitated silica, crystalline silica, fused silica, dolomite, silicic anhydride and hydrous silicic acid), and carbon black; fillers such as ground calcium carbonate, precipitated calcium carbonate, magnesium carbonate, china clay, calcined clay, clay, talc, titanium oxide, bentonite, organic bentonite, ferric oxide, red iron oxide, aluminum fine powder, flint powder, zinc oxide, activated zinc white, zinc powder, zinc carbonate, shirasu balloon, and the like fillers; fibrous fillers such as asbestos, glass fibers and glass filaments, carbon fibers, Kevlar fibers and polyethylene fibers; and the like.

These may be used singly or two or more of them may be used in combination.

<Plasticizer>

The plasticizers are not particularly limited and may be, for example, dibutyl phthalate, diheptyl phthalate, di (2-ethylhexyl)phthalate, butyl benzyl phthalate, dioctyl adipate, dioctyl sebacate, diethylene glycol dibenzoate, triethylene glycol dibenzoate, tricresyl phosphate, tributyl phosphate, chloro paraffins, alkyl diphenyl and partially-hydrogenated tarphenyl, and the like.

These may be used singly or two or more of them may be used in combination.

<Solvent>

The solvent is not particularly restricted but includes, among others, saturated hydrocarbon compounds such as hexane, heptane, octane, nonane, decane, cyclohexane, methylcyclohexane and ethylcyclohexane; aromatic solvents such as benzene, toluene, xylene, mesitylene and cresol; ether type solvents such as diethyl ether and tetrahydrofuran; ketone type solvents such as acetone, methyl ethyl ketone and methyl isobutyl ketone; and alcohol type solvents such as methanol, ethanol, propanol and butanol.

These may be used singly or two or more of them may be used in combination.

<Condensation catalyst>

A crosslinking auxiliary, a curing agent, a catalyst and/or the like may be added according to need for causing curing by the crosslinkable functional group (X). These may be selected for use according to the crosslinkable functional group (X) species employed.

When, for example, the crosslinkable functional group (X) is a crosslinkable silyl group, crosslinking and curing can be effected under siloxane bond formation in the presence or absence of an appropriate condensation catalyst known in the art. As for the condition of the curing product, a wide range of products, from a rubber-like one to a resinous one, can be produced according to the molecular weight and main chain skeleton of each polymer.

As examples of the condensation catalyst, there may be mentioned, for example, dibutyltin dilaulate, dibutyltin diacetate, dibutyltin diethylhexanoate, dibutyltin dioctate, dibutyltin dimethylmaleate, dibutyltin diethylmaleate, dibutyltin dibutylmaleate, dibutyltin diisooctylmaleate, dibutyltin ditridecylmaleate, dibutyltin dibenzylmaleate, dibutyltin maleate, dioctyltin diacetate, dioctyltin distearate, dioctyltin dilaurate, dioctyltin diethylmaleate, dioctyltin diisooctylmaleate, and the like stannic compounds; stannous compounds such as stannous octylate, stannous naphthanate, stannous stearate and the like; monobutyltin compounds such as monobutyltin trisoctoate and monobutyltin triisopropoxide, monooctyltin compounds, and the like monoalkyl tins; titanate esters such as tetrabutyl titanate and tetrapropyl titanate; organoaluminum compounds such as aluminum trisacetylacetonate and aluminum trisethylacetoacetate and diisopropoxyaluminum ethylacetoacetate; chelate compounds such as zirconium tetraacetylacetonate and titanium tetraacetylacetenate; lead octylate; amine compounds such as butylamine, octylamine, laurylamine, dibutylamine, monoethanolamine, diethanolamine, triethanolamine, diethylenetriamine, triethylenetetramine, oleylamine, cyclohexylamine, benzylamine, diethylaminopropylamine, xylylenediamine, triethylenediamine, guanidine, diphenylguanidine, 2,4,6-tris(dimethylaminomethyl)phenol, morpholine, N-methylmorpholine, 2-ethyl-4-methylimidazole and 1,8-diazabicyclo(5,4,0)undecene-7 (DBU), and salts of these amine compounds and carboxylic acids etc.; reaction products and mixtures of an amine compound and an organic tin compound such as reaction products or mixtures of laurylamine and tin octylate; low molecular weight polyamide resins obtained from excess polyamines and polybasic acids; reaction products of excess polyamines and epoxy compounds; amino group-containing silane coupling agents such as γ-aminopropyltrimethoxysilane, N-(β-aminoethyl)aminopropylmethyldimethoxysilane; other silanol condensation catalysts; other acidic catalysts, other basic catalysts, and the like conventionally known silanol condensation catalysts; and the like.

These condensation catalysts may be used singly or two or more of them may be used in combination.

When the crosslinkable functional group (X) is an epoxy, hydroxyl, amino, isocyanato, carboxylic acid, acid anhydride, alkenyl, (meth)acryloyl or active halogen group, it is also possible to use a crosslinking auxiliary, curing agent, catalyst and/or the like as selected from among the conventional ones according to the kind of that group.

(EFFECT OF THE INVENTION)

The acrylic block copolymer of the invention makes it possible to provide a reactive hot-melt pressure-sensitive adhesive composition showing only small changes in melt viscosity, showing good hot-melt applicability and excellent in initial cohesive force prior to moisture curing, and showing excellent tackiness and thermostable cohesive force after moisture curing.

BEST MODE FOR CARRYING OUT THE INVENTION

Hereinafter, the invention will be described with reference to practical Examples, however the invention should not be limited to the following Examples.

"Part" and "%" in the following Examples respectively mean "part by weight" and "% by weight".

In Examples below, phrases "number average molecular weight" and "molecular weight distribution (ratio of the weight average molecular weight and number average molecular weight)" were calculated by conversion into standardized polystyrene method using gel permeation chromatography (GPC). As GPC columns were used polystyrene-crosslinked gel-packed columns (Shodex GPC K-804, manufactured by Showa Denko K.K.) and as GPC solvent was used chloroform.

In order to determine the conversion, monomer concentration was measured by using gas chromatograph (GC) and then the residual monomer amount was quantified.

(Example 1)

Under nitrogen atmosphere, CuBr (3.41 g), acetonitrile (45.6 g), n-butyl acrylate (346 g), and diethyl 2,5-dibromoadipate (7.14 g) were added to a 2 L-glass reactor and stirred at 70 to 80°C for about 30 minutes. Pentamethyldiethylenetriamine was added in order to start the reaction. During the reaction, pentamethyldiethylenetriamine was properly added and the inner temperature was kept at 70 to 90°C. The total amount of the pentamethyldiethylenetriamine consumed by that time was 0.687 g. After 295 minutes from the start of the reaction, the conversion reached 97.8%. n-Stearyl acrylate (154 g) was added thereto, and the resultant was stirred for 290 minutes while further adding pentamethyldiethylenetriamine (0.275 g) and heating.

Acetonitrile (137 g), 1,7-octadiene (87.4 g), and pentamethyldiethylenetriamine (1.37 g) were added to the resulting reaction system and continuously stirred for 14 hours. The mixture was stirred under heating condition and reduced pressure at 80°C for removing volatile components. Then, a crosslinkable alkenyl group-terminated acrylic block copolymer (I-a) was obtained. The number average molecular weight and the molecular weight distribution of the polymer were 31,000 and 1.3, respectively. The average number of alkenyl groups introduced into one molecule of the polymer was measured by $^1$H-NMR analysis to find it was about 1.7.

Toluene was added to the resulting condensed product for dissolving the polymer, followed by addition of china clay as a filtration aid and aluminum silicate and hydrotalcite as adsorbents, and then the resulting system was stirred under heating condition at an inner temperature of 100°C under oxygen-nitrogen mixed gas atmosphere (oxygen concentration 6%) . Solid matter in the mixed solution was removed by filtration and the filtrate was stirred under heating condition and reduced pressure at an inner temperature of 100°C for removing volatile components.

Aluminum silicate and hydrotalcite as adsorbents, and a heat deterioration-preventing agent were further added to the condensed product, and the product was successively stirred under heating condition and reduced pressure (average temperature; about 175°C, and degree of reduced pressure; 10 Torr or lower).

Aluminum silicate and hydrotalcite as adsorbents were further added and an antioxidant was also added, and the product was successively stirred under heating condition at an inner temperature of 150°C under oxygen-nitrogen mixed gas atmosphere (oxygen concentration 6%).

Toluene was added to the resulting condensed product for dissolving the polymer, followed by removing of the solid matter in the mixed solution by filtration, and the filtrate was stirred under heating condition and reduced pressure for removing volatile components.

The acrylic block copolymer (I-a) after purification, dimethoxymethylsilane (2.0 mole equivalents per one alkenyl group), methyl orthoformate (1.0 mole equivalent per one alkenyl group), and a platinum catalyst [xylene solution of bis (1,3-divinyl-1,1,3,3-tetramethyldisiloxane)-platinum complex catalyst; hereinafter, referred to as platinum catalyst] (10 mg on the basis of platinum per 1 kg of the polymer) were mixed and stirred under heating condition and nitrogen atmosphere at 100°C. After confirmation of disappearance of the alkenyl group, the reaction mixture was concentrated to give dimethoxysilyl group-terminated acrylic block copolymer (I-s). The number average molecular weight and the molecular weight distribution of the polymer were 34, 000 and 1.3, respectively. The average number of silyl groups introduced into one molecule of the polymer was measured by $^1$H-NMR analysis to find it was 1.6.

The acrylic block copolymer (I-s) obtained occurred as a semisolid sticky at room temperature. When heated at 50°C, it readily melted and showed fluidity. To 100 parts by weight of the acrylic block copolymer (I-s) in that state was added 1 part by weight of a curing catalyst (tetravalent tin, Neostann U-220: product of Nitto Kasei Co., Ltd.), followed by thorough stirring. The resulting mixture was poured into a mold in the manner of coating and allowed to cool and stand at room temperature, whereupon it solidified to give a sticky sheet. The sheet was further allowed to stand at 23°C for 3 days and then at 50°C for 3 days to give a sheet-like curing product with a thickness of about 2 mm. This sheet-like curing product showed tackiness without flowing even at 100°C.

(Comparative Example 1)

Under nitrogen atmosphere, CuBr (3.41 g), acetonitrile (45.6 g), butyl acrylate (346 g), and diethyl 2,5-dibromoadipate (7.14 g) were added to a 2 L-glass reactor and stirred at 70 to 80°C for about 30 minutes. Pentamethyldiethylenetriamine was added in order to start the reaction. During the reaction, pentamethyldiethylenetriamine was properly added and the inner temperature was kept at 70 to 90°C. The total amount of the pentamethyldiethylenetriamine consumed by that time was 0.687 g. After 295 minutes from the start of the reaction, the conversion reached 97.8%.

Stearyl acrylate (154 g) was added thereto, and the resultant was stirred for 290 minutes while further adding pentamethyldiethylenetriamine (0.275 g) and heating.

The mixture was stirred under heating condition and reduced pressure at 80°C for removing volatile components. Toluene was added to the resultant and the obtained mixture was thoroughly mixed, followed by addition of china clay as a filtration aid and aluminum silicate and hydrotalcite as adsorbents, and then the resulting system was stirred under heating condition at an inner temperature of 100°C under oxygen-nitrogen mixed gas atmosphere (oxygen concentration 6%) . Solid matter in the mixed solution was removed by filtration and the filtrate was stirred under heating condition and reduced pressure at an inner temperature of 100°C for removing volatile components.

The resultant was diluted into N, N-dimethyl acetamide and the obtained product was stirred at 70°C for 7 hours

in the coexistence of potassium acetate under heating condition. After concentration, the product was diluted into toluene for removing solid matter. After additional concentration thereof, aluminum silicate and hydrotalcite were added, and then the resulting system was stirred under heating condition at an inner temperature of 100°C under oxygen-nitrogen mixed gas atmosphere (oxygen concentration 6%). The resultant was filtered, and the filtrate was concentrated in order to obtain an acrylic block copolymer (I-n) which is not terminated with a crosslinkable functional group. The number average molecular weight and the molecular weight distribution of the polymer were 31,000 and 1.3, respectively.

The acrylic block copolymer (I-n) obtained occurred as a semisolid sticky at room temperature. When heated at 50°C, it readily melted and showed fluidity. The resulting mixture was poured into a mold in the manner of coating and allowed to cool and stand at room temperature, whereupon it solidified to give a sticky sheet. However, this sheet did not set but, upon rewarming at 100°C, it became fluid and could no longer retain its original sheet form.

INDUSTRIAL APPLICABILITY

The acrylic block copolymer of the invention makes it possible to provide a reactive hot-melt pressure-sensitive adhesive composition showing only small changes in melt viscosity, showing good hot-melt applicability and excellent in initial cohesive force prior to moisture curing, and showing excellent tackiness and thermostable cohesive force after moisture curing.

## Claims

**1.** An acrylic block copolymer
which comprises an acrylic polymer block (A) and an acrylic polymer block (B) differing in glass transition temperature range and having at least one crosslinkable functional group (X) at its molecular termini.

**2.** The acrylic block copolymer according to Claim 1
which comprises at least one block copolymer selected from among block copolymers represented by the general formula: $(A\text{-}B)_n$, the general formula: $B\text{-}(A\text{-}B)_n$ or the general formula: $(A\text{-}B)_n\text{-}A$ (wherein, in each formula, n is an integer of 1 to 3 and, when a plurality of As and/or Bs are involved, they may respectively be the same or different.)

**3.** The acrylic block copolymer according to Claim 1 or 2
wherein the acrylic polymer block (A) comprises a polymer having a glass transition temperature of not lower than 0°C.

**4.** The acrylic block copolymer according to any one of Claims 1 to 3
wherein, among the monomers constituting the acrylic polymer block (A), an acrylic monomer (a) accounts for 50 to 100% by weight of the whole of the constituent monomers.

**5.** The acrylic block copolymer according to Claim 4
wherein the acrylic monomer (a) is one such that a homopolymer thereof shows a glass transition temperature of not lower than 0°C.

**6.** The acrylic block copolymer according to Claim 4 or 5
wherein the acrylic monomer (a) comprises at least one monomer selected from the group consisting of acrylic acid, methyl acrylate, tert-butyl acrylate, phenyl acrylate, benzyl acrylate, norbornyl acrylate, isobornyl acrylate, adamantyl acrylate, and acrylic acid alkyl esters whose alkyl moiety contains 13 to 20 carbon atoms (exclusive of isomyristyl acrylate, isopalmityl acrylate, isostearyl acrylate and isoeicosyl acrylate).

**7.** The acrylic block copolymer according to any one of Claims 1 to 6
wherein the acrylic block copolymer (B) comprises a polymer having a glass transition temperature of not lower than -100°C but lower than 0°C.

**8.** The acrylic block copolymer according to any one of Claims 1 to 7
wherein, among the monomers constituting the acrylic polymer block (B), an acrylic monomer (b) accounts for 50 to 100% by weight of the whole of the constituent monomers.

**9.** The acrylic block copolymer according to Claim 8
wherein the acrylic monomer (b) is one such that a homopolymer thereof shows a glass transition temperature of not lower than -100°C but lower than 0°C.

**10.** The acrylic block copolymer according to Claim 8 or 9 wherein the acrylic monomer (b) comprises at least one monomer selected from the group consisting of acrylic acid alkyl esters whose alkyl moiety contains 2 to 12 carbon atoms (exclusive of tert-butyl acrylate), isomyristyl acrylate, isopalmityl acrylate, isostearyl acrylate and isoeicosyl acrylate.

**11.** The acrylic block copolymer according to any one of Claims 1 to 10 wherein the crosslinkable functional group (X) comprises at least one group selected from the group consisting of crosslinkable silyl, epoxy, hydroxyl, amino, isocyanato, carboxylic acid, acid anhydride, alkenyl, (meth)acryloyl and active halogen groups.

**12.** The acrylic block copolymer according to any one of Claims 1 to 11 wherein the crosslinkable functional group (X) is a crosslinkable silyl group represented by the general formula 1:

$$-Si(R^{10})_{3-d}(Y)_d \qquad (1)$$

(wherein $R^{10}$ represents an alkyl group containing 1 to 20 carbon atoms, an aryl group containing 6 to 20 carbon atoms, an aralkyl group containing 7 to 20 carbon atoms or a triorganosiloxy group represented by the formula $(R')_3SiO-$ (in which R' is a monovalent hydrocarbon group containing 1 to 20 carbon atoms and the three R' groups may be the same or different) and, when the silyl group contains two or more $R^{10}$ groups, these may be the same or different; Y represents a hydroxyl group or a hydrolysable group and, when the silyl group contains two or more Y groups, these may be the same or different; and d represents 1, 2 or 3.)

**13.** The acrylic block copolymer according to any one of Claims 1 to 12 which has a number average molecular weight of 2,000 to 200,000.

**14.** The acrylic block copolymer according to any one of Claims 1 to 13 which has a number average molecular weight of 3,000 to 150,000.

**15.** The acrylic block copolymer according to any one of Claims 1 to 14 which has a number average molecular weight of 5, 000 to 100,000.

**16.** A reactive hot-melt adhesive composition which comprises the acrylic block copolymer according to any one of Claims 1 to 15.

**INTERNATIONAL SEARCH REPORT**

International application No.
PCT/JP2006/306160

A. CLASSIFICATION OF SUBJECT MATTER
*C08F8/00*(2006.01), *C08F293/00*(2006.01), *C09J153/00*(2006.01)

According to International Patent Classification (IPC) or to both national classification and IPC

B. FIELDS SEARCHED

Minimum documentation searched (classification system followed by classification symbols)
C08F8/00-8/50, C08F293/00-297/08, C09J153/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2002-69412 A (Nitto Denko Corp.), 08 March, 2002 (08.03.02), Claim 1; Par. Nos. [0018], [0023] to [0024], [0032], [0040], [0044], [0046] (Family: none) | 1-11,13-16 |
| X | JP 2004-300202 A (Nippon Shokubai Co., Ltd.), 28 October, 2004 (28.10.04), Claims 1, 2; Par. Nos. [0016], [0021] to [0022] (Family: none) | 1-10,13-16 |
| X | JP 2000-186126 A (KANEKA Corp.), 04 July, 2000 (04.07.00), Claims 1 to 34; Par. Nos. [0142] to [0149] & US 6479584 B1 & EP 1153950 A1 & WO 00/11056 A1 & CA 2342788 A | 1,2,4,7-15 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>25 May, 2006 (25.05.06) | Date of mailing of the international search report<br>06 June, 2006 (06.06.06) |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

International application No.
PCT/JP2006/306160

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-60449 A (KANEKA Corp.), 26 February, 2002 (26.02.02), Claims 1 to 23 (Family: none) | 1-16 |
| A | JP 5-505833 A (Eruf Atkem S.A.), 26 August, 1993 (26.08.93), Claims 1 to 10 & US 5391628 A1 & EP 442804 A1 & WO 91/12284 A1 & CA 2076027 A | 1-16 |
| A | JP 2003-105300 A (KANEKA Corp.), 09 April, 2003 (09.04.03), Claims 1 to 5 (Family: none) | 1-16 |
| A | JP 2004-204231 A (National Starch and Chemical Investment Holding Corp.), 22 July, 2004 (22.07.04), Claims 1 to 3; Par. No. [0039] & US 2004/122161 A1 & EP 1431363 A2 & CA 2453746 A1 | 1-16 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 5320608 A
- WO 9630421 A
- WO 9718247 A
- WO 9801480 A
- WO 9840415 A
- JP 9208616 A
- JP 8041117 A
- JP 5262808 A
- JP 6239912 A
- JP 8283310 A
- JP 3014068 B
- JP 4055444 B


### Non-patent literature cited in the description


- Polymer Handbook. Wiley-Interscience, 1989
- **WU et al.** *Polymer Engineering and Science,* 1990, vol. 30, 753
- Polymer Handbook
- *Journal of American Chemical Society (J. Am. Chem. Soc.,* 1994, vol. 116, 7943
- *Macromolecules,* 1994, vol. 27, 7228
- *Macromolecules,* 1995, vol. 28, 2993
- **MATYJASZEWSKI et al.** *Journal of American Chemical Society (J. Am. Chem. Soc.,* 1995, vol. 117, 5614
- *Macromolecules,* 1995, vol. 28, 7901
- *Science,* 1996, vol. 272, 866
- **SAWAMOTO et al.** *Macromolecules,* 1995, vol. 28, 1721
- *Macromolecules,* 1999, vol. 32, 2872